# EUROPÄISCHE PATENTSCHRIFT

(11) **EP 3 600 981 B1**
(45) Veröffentlichungstag und Bekanntmachung des Hinweises auf die Patenterteilung: **02.08.2023**
(21) Anmeldenummer: 18715530.4
(22) Anmeldetag: 21.03.2018
(51) Int. Cl.: B60T 7/04, B60T 13/66, B60T 13/68

(54) **ELEKTRO-PNEUMATISCHE HANDBREMSE (EPH) MIT INTEGRIERTEM TCV (EUROPÄISCHE UND SKANDINAVISCHE ANSTEUERUNG)**
ELECTROPNEUMATIC HAND BRAKE (EPH) HAVING INTEGRATED TCV (EUROPEAN AND SCANDINAVIAN CONTROL)
FREIN À MAIN ÉLECTRO-PNEUMATIQUE (EPH) AVEC VALVE TCV (SYSTÈME DE COMMANDE EUROPÉEN ET SCANDINAVE) INTÉGRÉE

(30) Priorität: 21.03.2017 DE 102017002715; 24.06.2017 DE 102017006356
(43) Veröffentlichungstag der Anmeldung: 05.02.2020
(73) Patentinhaber: ZF CV Systems Europe BV, 1170 Brussels (BE)
(72) Erfinder: VAN THIEL, Julian, 30938 Grossburgwedel (DE)
(74) Vertreter: Rabe, Dirk-Heinrich
(86) Internationale Anmeldenummer: PCT/EP2018/057119
(87) Internationale Veröffentlichungsnummer: WO 2018/172394

(56) Entgegenhaltungen:
- EP-A1- 2 615 003
- EP-A1- 2 821 303
- WO-A1-2016/169975
- WO-A1-2016/177475
- WO-A2-2009/152982
- DE-A1-102005 060 225
- DE-A1-102007 038 472
- DE-A1-102007 047 691
- DE-A1-102008 014 458
- DE-A1-102015 112 490
- DE-B3-102008 009 043

## Beschreibung

Die Erfindung betrifft ein elektropneumatisches Steuermodul für ein elektronisch steuerbares pneumatisches Bremssystem für ein Fahrzeug mit einem Zugwagen und einem Anhängerwagen, mit einem pneumatischen Vorratseingang, der mit einem Druckluftvorrat verbindbar ist, einer Anhängersteuereinheit, die eine Anhängersteuer-Ventileinheit mit einem oder mehreren elektropneumatischen Ventilen, einen Anhängerbremsdruckanschluss und einen Anhängerversorgungsdruckanschluss aufweist, einer Feststellbremseinheit, die einen Federspeicher-Anschluss für einen Federspeicher für einen Zugwagen und eine Feststellbrems-Ventileinheit mit einem oder mehreren elektropneumatischen Ventilen aufweist und einer elektronischen Steuereinheit, wobei die elektronische Steuereinheit dazu eingerichtet ist, die Feststellbrems-Ventileinheit basierend auf einem elektronischen Feststellsignal zu veranlassen, wenigstens ein Ventil der Feststellbrems-Ventileinheit so zu schalten, dass der Federspeicher-Anschluss zum Entlüften des Federspeichers mit einer Drucksenke verbunden wird. Die Erfindung betrifft ferner einen Zugwagen mit einem elektropneumatischen Steuermodul der vorstehenden Art.

In Fahrzeugen, insbesondere Nutzfahrzeugen, mit einem pneumatischen Bremssystem, insbesondere ausgebildet als elektronisches Bremssystem (EBS) oder Antiblockiersystem (ABS) können zum Aussteuern von Bremsdrücken von einer Steuereinheit (ECU) elektropneumatische Ventile, beispielsweise Relaisventilen vorgeschaltete elektropneumatische Umschaltventile z.B. 3/2-Wegeventil oder Achsmodulatoren, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten.

Bei Bremssystemen für einen Fahrzeugzug weist das Bremssystem eine Anhängersteuereinheit, auch Trailer Control Valve (TCV) genannt, auf, die dazu vorgesehen ist, die von dem Zugwagen vorgegebenen Fahrzeug-Soll-Verzögerungen entsprechend auch über Anschlüsse, nämlich einen Anhängerbremsdruckanschluss und einen Anhängerversorgungsdruckanschluss, die auch als gelber und roter Kupplungskopf bezeichnet werden, pneumatisch auszusteuern. Über den Anhängerversorgungsdruckanschluss wird der Anhängerwagen mit einem Versorgungsdruck aus einem dafür vorgesehenen Vorrat des Zugwagens versorgt, während über den Anhängerbremsdruckanschluss der entsprechende Bremsdruck ausgesteuert wird.

Als ein weiteres Bauteil oder Modul weisen Bremssysteme der vorstehenden Gattung eine Feststellbremseinheit, auch als elektropneumatische Handbremse (EPH) bezeichnet, auf. Solche Feststellbremseinheiten werden üblicherweise mit sogenannten Federspeichern betrieben, also Bremseinrichtungen, die aufgrund einer Federkraft eine oder mehrere Achsen des Zufahrzeugs bremsen. Im belüfteten Zustand sind die Bremsen gelöst und im entlüfteten Zustand gebremst. In einem drucklosen Zustand wird das entsprechende Fahrzeug also gebremst. Zur Aktivierung der Feststellbremseinheit ist in der Regel in der Fahrerkabine des Zugwagens ein elektrischer Schalter vorgesehen, über den ein entsprechendes Signal an eine elektronische Steuereinheit ausgebbar ist, die dann ein oder mehrere elektropneumatische Ventile so schaltet, dass die Federspeicher entweder ent- oder belüftet werden.

Die Feststellbremseinheit, also die elektropneumatische Handbremse, wird zum Parken des Fahrzeugzugs aber auch als Zusatzbremse in besonderen Situationen verwendet. Das heißt, neben dem normalen Betriebsbremsen werden die Federspeicher wenigstens teilweise entlüftet, um diese zusätzlich oder alternativ zur Bremsung zu verwenden. So wird z.B. bei einem reinen Hilfsbremsen ausschließlich über Federspeicher im Zugfahrzeug und Betriebsbremsen im Anhängerwagen gebremst. Die Betriebsbremsen im Zugfahrzeug sind beim reinen Hilfsbremsen unbestätigt. Alternativ kann auch ein Redundanzmodus umgesetzt werden, wo z.B. bei einem Kreisausfall an der Hinterachse alternativ zu den Betriebsbremsen die Federspeicher zur Hilfe genommen werden. Die Vorderachse kann weiterhin über Betriebsbremsen gebremst werden, und der Anhängerwagen ebenfalls über Betriebsbremsen.

Um hier ein entsprechendes Bremssignal auch für den Anhängerwagen pneumatisch auszusteuern, wird in der Regel ein sogenanntes inverses Relaisventil verwendet, welches basierend auf einem sinkenden Druck in den Federspeichern einen steigenden Druck aussteuert. Solche inversen Relaisventile sind in ihrer Bauart aufwendig und weisen häufig mehrere Steuerkolben auf, die über verschiedene Steuerflächen und verschiedene Steuerkammern miteinander interagieren.

Ferner wird bei Bremssystemen der eingangs genannten Art zwischen der sogenannten "europäischen Anhängersteuerung" und der "skandinavischen Anhängersteuerung" unterschieden. Während bei der "europäischen Anhängersteuerung" im abgestellten Zustand des Fahrzeugzugs ein den entlüfteten Federspeichern entsprechender positiver Bremsdruck an dem Anhängerwagen ausgesteuert wird, um diesen zusätzlich zu bremsen, ist bei der "skandinavischen Anhängersteuerung" das Gegenteil der Fall: Im abgestellten Zustand des Fahrzeugzugs sollen die Betriebsbremsen des Anhängerwagens gelöst sein. Das bedeutet, bei der "europäischen Anhängersteuerung" muss im abgestellten Zustand des Fahrzeugzugs, also im stromlosen Zustand, permanent ein positiver Bremsdruck über die Anhängersteuereinheit (TCV) an die Betriebsbremsen des Anhängerwagens ausgesteuert werden.

Da in der Praxis also die Anhängersteuereinheit (TCV) und die Feststellbremseinheit (EPH) interagieren, hat sich eine Integration dieser beiden Module als wünschenswert herausgestellt. Ein erster Ansatz der Integration ist beispielsweise in DE 10 2016 003 034 A1 offenbart. Während früher die Feststellbremseinheit (EPH) häufig in eine Druckluftaufbereitungseinheit integriert wurde, schlägt DE 10 2016 003 034 A1 vor, die Feststellbremseinheit (EPH) in die Anhängersteuereinheit (TCV) zu integrieren. Dies ermögliche eine besonders einfache Integration der elektropneumatischen Komponenten in das Fahrzeug. Entsprechendes solle gelten, wenn die Steuereinrichtung zumindest teilweise in einer solchen Anhängereinrichtung integriert sei.

Auf ähnliche Weise schlägt auch DE 10 2008 014 458 A1 der hiesigen Anmelderin eine elektropneumatische Einrichtung vor, insbesondere eine Luftaufbereitungseinrichtung, einen Achsmodulator, ein Anhängersteuerventil, eine Steuereinrichtung eines elektronischen Bremssystems oder eine Fahrdynamikregelungseinrichtung, und/oder eine elektropneumatische Einrichtung des Fahrzeugs, insbesondere eine Luftaufbereitungseinrichtung oder eine Luftfederungseinrichtung mit einer darin integrierten Feststellbremsfunktion.

Eine praktische Ausführung für die "skandinavische Anhängersteuerung" ist in DE 10 2015 112 490 A1 offenbart. Dort ist ein elektropneumatisches Steuermodul nach dem Oberbegriff des Anspruchs 1 offenbart. Das dort offenbarte Steuermodul weist eine gemeinsame Steuereinheit (ECU) sowohl für eine Feststellbremseinheit (EPH) als auch für eine Anhängersteuereinheit (TCV) auf. Konkret ist in DE 10 2015 112 490 A1 eine elektropneumatische Steuereinrichtung einer elektropneumatischen Bremsanlage einer Zugfahrzeug-Anhänger-Kombination wenigstens zum Steuern des Feststellbremsens der Zugfahrzeug-Anhänger-Kombination und des Hilfsbremsens der Zugfahrzeug-Anhänger-Kombination sowie des Betriebsbremsens wenigstens des Anhängers offenbart, mit wenigstens einem Gehäuse, in oder an welchem Folgendes angeordnet ist: a) ein pneumatischer Steuereingangsanschluss für eine zu einem pneumatischen Kanal einer Betriebsbremsbetätigungseinrichtung des Zugfahrzeugs führenden Steuerleitung, b) ein pneumatischer Versorgungsanschluss für eine zu wenigstens einem Druckluftvorrat des Zugfahrzeugs führende Versorgungsleitung, c) ein pneumatischer Steuerausgangsanschluss für eine zu einem Kupplungskopf "Bremse" des Zugfahrzeugs führende Betriebsleitung, d) ein pneumatischer Versorgungsausgangsanschluss für eine zu einem Kupplungskopf "Vorrat" des Zugfahrzeugs führende Versorgungsleitung, e) ein Feststellbremsausgangsanschluss für eine zu einem Federspeicherbremszylinder des Zugfahrzeugs führende Bremsleitung, f) ein elektrischer Feststellbremssteueranschluss für eine zu einer elektrischen Feststellbremsbetätigungseinrichtung führende Steuerleitung, g) ein elektrischer Betriebsbremssteueranschluss für eine zu einem elektrischen Kanal der Betriebsbremsbetätigungseinrichtung führende Signalleitung, h) ein erstes Relaisventil mit einem Steuereingang, einem ersten Arbeitsausgang und einem Versorgungseingang, wobei der erste Arbeitsausgang mit dem Feststellbremsausgangsanschluss und der Versorgungseingang mit dem Versorgungseingangsanschluss verbunden ist, i) ein elektronisches Steuergerät, j) eine von dem elektronischen Steuergerät gesteuerte erste elektromagnetische Einlass-/Auslass-Ventilkombination, welche den Steuereingang des ersten Relaisventils sperrt, mit einer Druckluftsenke oder mit dem pneumatischen Versorgungsanschluss verbindet, k) ein zweites Relaisventil mit einem pneumatischen Versorgungseingang, welcher mit dem Versorgungseingangsanschluss verbunden ist, einem pneumatischen Versorgungsausgang, welcher mit dem Versorgungsausgangsanschluss verbunden ist, einem zweiten Arbeitsausgang, welcher mit dem Steuerausgangsanschluss verbunden ist und mit einem ersten pneumatischen Steuereingang und einem zweiten pneumatischen Steuereingang, I) eine von dem elektronischen Steuergerät gesteuerte elektromagnetische Ventileinrichtung mit einer zweiten elektromagnetischen Einlass-/Auslass-Ventilkombination und einem elektromagnetischen Backup-Ventil, wobei das Backup-Ventil im unbetstromten Zustand den Steuereingangsanschluss mit dem ersten pneumatischen Steuereingang des zweiten Relaisventils verbindet und bestromt diese Verbindung sperrt und wobei die zweite elektromagnetische Einlass-/Auslass-Ventilkombination einen zweiten pneumatischen Steuereingang des zweiten Relaisventils sperrt, mit einer Druckluftsenke oder mit dem pneumatischen Versorgungseingangsanschluss verbindet, wobei m) das zweite Relaisventil zwei Steuerkolben umfasst, einen ersten Steuerkolben, welcher eine mit dem ersten pneumatischen Steuereingang in Verbindung stehende erste Steuerkammer begrenzt sowie einen zweiten Steuerkolben, welcher eine mit dem zweiten pneumatischen Steuereingang in Verbindung stehende zweite Steuerkammer begrenzt, wobei der erste Steuerkolben und der zweite Steuerkolben mit einem Doppelsitzventil zusammenwirken, welches ein Einlassventil sowie ein Auslassventil zur Be- oder Entlüftung des zweiten Arbeitsausgangs aufweist. Über eine elektromagnetische Ventileinrichtung können die beiden Steuerkolben des zweiten Relaisventils so gesteuert werden, dass einerseits mittels des ersten Steuerkolbens ein Betriebsbremsen des Anhängers sowie ein Hilfsbremsen ausgeführt wird, wenn die Federspeicher des Zugwagens zum Bremsen verwendet werden. Der zweite Steuerkolben wird für einen Redundanzfall eingesetzt, wenn der Fahrzeugführer manuell über ein Bremspedal einen Redundanzdruck aussteuert. Eine "europäische Anhängersteuerung" dergestalt, dass im unbestromten Zustand des Fahrzeugs bei entlüfteten Federspeichern der Anhänger über einen Bremsdruck mittels der Betriebsbremsen dauerhaft gebremst wird, ist bei der Konfiguration aus DE 10 2015 112 490 A1 nicht möglich und auch explizit nicht vorgesehen. Zudem ist die Konstruktion des Relaisventils mit zwei Steuerkolben in einem Relaisventil aufwendig.

Ferner ist aus DE 10 2012 000 435 A1 der hiesigen Anmelderin ein Feststellbremsmodul für eine "europäische Anhängersteuerung" bekannt. Das dort offenbarte Modul nutzt ein Relaisventil sowie ein erstes und ein zweites bistabiles Ventil, um den entsprechenden Bremsdruck für die Betriebsbremsen des Anhängers auch im stromlosen Zustand bei entlüfteten Federspeichern aussteuern zu können.

Weiterhin ist aus DE 10 2004 051 309 B4 eine aus Modulen mit elektrischen und/oder pneumatischen Komponenten aufgebaute elektropneumatische Zentraleinheit des Nutzfahrzeugs offenbart. Die Zentraleinheit kann aus einzelnen Modulen zusammengesteckt werden, um entsprechende Funktionalitäten zu erreichen. Die einzelnen Module weisen elektrische und pneumatische Anschlüsse auf, die miteinander korrespondieren.

DE 10 2007 047 691 A1 offenbart einen Feststellbremsmodulator, mittels dessen Betriebsbremsen des Anhängers in Übereinstimmung mit Federspeichern des Zugwagens angesteuert werden können. Der Feststellbremsmodulator weist ein Zugwagenschutzventil auf, das so ausgebildet ist, dass bei einem Druckabfall des Vorratsdrucks für den Anhänger auch die Steuerdruckleitung gesperrt wird. Ein Modul mit sämtlichen Merkmale im Oberbegriff des Anspruchs 1 ist in der WO 2016/177475 A1 gezeigt.

Aufgabe der vorliegenden Erfindung ist es, ein elektropneumatisches Steuermodul sowie einen Zugwagen mit einem solchen elektropneumatischen Steuermodul der eingangs genannten Art anzugeben, welches einen vereinfachten Aufbau aufweist, insbesondere leicht nachrüstbar ist und eine "europäische Anhängersteuerung" erlaubt.

Die Aufgabe wird bei einem elektropneumatischen Steuermodul der eingangs genannten Art gelöst durch eine Parkbrems-Ventileinheit mit einem pneumatisch gesteuerten Schaltventil, welches einen pneumatischen Steuereingang zum Aufnehmen eines pneumatischen Steuerdrucks aufweist, wobei das pneumatisch gesteuerte Schaltventil bei Verbinden des Federspeicher-Anschlusses mit der Drucksenke so geschaltet wird, dass ein Bremsdruck an dem Anhängerbremsdruckanschluss aussteuerbar ist.

Durch Einsatz des pneumatisch gesteuerten Schaltventils wird einerseits ein einfacher Aufbau erreicht, der es ermöglicht, auf ein inverses Relaisventil zu verzichten, andererseits wird die Aussteuerung eines Bremsdrucks an dem Anhängerbremsdruckanschluss in dem Fall erreicht, wenn die Federspeicher entlüftet sind. Es ist mit dieser Lösung also möglich, einerseits auf das inverse Relaisventil zu verzichten und andererseits eine sichere Anhängerbremsung gemäß der "europäischen Anhängersteuerung" zu erreichen. Hierzu ist auch kein weiteres elektropneumatisches Ventil erforderlich, wie dies im Stand der Technik teilweise genutzt wurde. Ein pneumatisch gesteuertes Schaltventil hat den Vorteil, dass es auch stromlos aufgrund des pneumatischen Drucks alleine geschaltet werden kann. Das pneumatisch gesteuerte Schaltventil gemäß der Erfindung weist eine erste und eine zweite Schaltstellung auf, wobei es in der zweiten Schaltstellung so geschaltet ist, dass ein Bremsdruck am Anhängerbremsdruckanschluss ausgesteuert wird und in der zweiten Schaltstellung kein Bremsdruck an dem Anhängerbremsdruckanschluss ausgesteuert wird. Das pneumatisch gesteuerte Schaltventil ist vorzugsweise stromlos, insbesondere federbelastet in die erste Schaltstellung vorgespannt. Dies bedeutet, dass nur bei einem entsprechenden pneumatischen Druck am Steuereingang kein Bremsdruck an dem Anhängerbremsdruckanschluss ausgesteuert wird.

Dementsprechend ist der pneumatische Steuerdruck in einer ersten Ausführungsform der Druck an dem Federspeicher-Anschluss. Solange also die Federspeicher gelöst sind und die Zylinder der Federspeicher belüftet sind, ist das pneumatisch gesteuerte Schaltventil in der zweiten Schaltstellung, und wenn der Federspeicher-Anschluss mit einer Drucksenke verbunden ist und die Federspeicher entlüftet sind, wird das pneumatisch gesteuerte Schaltventil aufgrund der Federbelastung in die zweite Schaltstellung verbracht.

Alternativ ist es in einer weiteren Ausführungsform möglich, dass der pneumatische Steuerdruck ein Feststellbrems-Steuerdruck in einer vorgeschalteten Vorsteuereinheit der Feststellbremseinheit ist. Es kann also ebenso ein dem Druck an dem Federspeicher-Anschluss entsprechender bzw. äquivalenter Druck verwendet werden, wie insbesondere ein Steuerdruck für die Feststellbremsen. Zum Beispiel ist es möglich, den Steuerdruck an einem Relaisventil der Feststellbremseinheit (EPH) zu verwenden. Es ist also möglich, sowohl den Arbeitsdruck, der tatsächlich an dem Federspeicher anliegt, als Steuerdruck für das pneumatisch gesteuerte Schaltventil zu verwenden, als auch einen den Arbeitsdruck der Federspeicher aussteuernden Steuerdruck.

In einer weiteren bevorzugten Ausführungsform weist das elektropneumatische Steuermodul einen Redundanzdruckanschluss mit einer ersten Redundanzdruckleitung zum Anschluss eines Bremswertgebers oder des Brems- oder Steuerdrucks einer der anderen Fahrzeugachsen, über den z.B. durch Betätigung eines Bremspedals ein pneumatischer Bremsdruck am Anhängerbremsdruckanschluss aussteuerbar ist. Der Bremswertgeber kann rein pneumatisch, elektropneumatisch oder auf sonstige Weise ausgebildet sein. Der Redundanzdruckanschluss dient dazu, eine Fahrzeug-Soll-Verzögerung eines Fahrzeugführers zu empfangen, die dieser mittels des Bremswertgebers manuell einsteuert. Der Fahrzeugführer kann so in einem Fehlerfall, z.B. bei Ausfall der Versorgungsspannung rein pneumatisch einen Bremsdruck aussteuern. Alternativ wird an dem Redundanzanschluss ein Brems - oder Steuerdruck einer anderen Fahrzeugachse, z.B. der Vorderachse, ausgesteuert. Hierdurch kann dann im Fehlerfall der Anhängerwagen in Übereinstimmung mit der anderen Achse gebremst werden.

In einer bevorzugten Ausführungsform ist vorgesehen, dass das pneumatisch gesteuerte Schaltventil mit einem Auslass mit einer zweiten Redundanzdruckleitung verbunden ist, mit welcher auch die erste Redundanzdruckleitung verbindbar ist, sodass bei Schalten des pneumatisch gesteuerten Schaltventils ein Druck in die zweite Redundanzdruckleitung aussteuerbar ist. Vorzugsweise ist folglich durch Schalten des pneumatisch gesteuerten Schaltventils ein pneumatischer Bremsdruck am Anhängerbremsdruckanschluss aussteuerbar. In der Redundanzdruckleitung ist vorzugsweise ein Redundanzventil angeordnet, welches beispielsweise als 2/2-Wegeventil ausgebildet sein kann. Das Redundanzventil wird dazu verwendet den Redundanzdruck im üblichen Fahrbetrieb auszusperren. Durch die Verknüpfung des pneumatisch gesteuerte Schaltventil mit einem Auslass mit einer zweiten Redundanzdruckleitung, kann das Redundanzventil dazu eingesetzt werden den von dem pneumatisch gesteuerten Schaltventil ausgesteuerten Druck auszusperren und so eine "Anhängerkontrollstellung" auszuführen, wie dies weiter unten noch genauer beschrieben werden wird. Weiterhin wird hierdurch die Bauweise und das Layout weiter vereinfacht, da nur eine Leitung, nämlich die zweite Redundanzdruckleitung, verwendet wird, um sowohl den Redundanzdruck als auch den Druck aus dem pneumatisch gesteuerten Schaltventil (Parkbremsdruck) auszusteuern. Es hat sich gezeigt, dass dies möglich ist, da der Redundanzdruck nur dann ausgesteuert wird, wenn das Fahrzeug im Betrieb ist, der Parkbremsdruck aber nur dann, wenn das Fahrzeug geparkt wird. Hierdurch werden Bauteile eingespart, und der Aufbau kann kompakter gestaltet werden.

Weiterhin ist bevorzugt, dass das pneumatisch gesteuerte Schaltventil als 3/2-Wegeventil mit einem ersten, einem zweiten und einem dritten Anschluss ausgebildet ist. Der dritte Anschluss ist vorzugsweise wie oben beschrieben mit der zweiten Redundanzdruckleitung verbunden und als Auslass ausgebildet.

In einer bevorzugten Variante ist der erste Anschluss des 3/2-Wegeventils mit dem Redundanzdruckanschluss und der zweite Anschluss des 3/2-Wegeventils mit dem Vorratseingang verbunden. Das 3/2-Wegeventil schaltet also in dieser Variante zwischen dem Redundanzdruckanschluss und dem Vorratseingang abhängig von dem pneumatischen Steuerdruck am Steuereingang hin und her und steuert diesen Druck in die zweite Redundanzdruckleitung aus. Der erste Anschluss des 3/2-Wegeventils ist vorzugsweise über die erste Redundanzdruckleitung mit dem Redundanzdruckanschluss verbunden. Werden folglich die Federspeicher entlüftet, schaltet das 3/2-Wegeventil aufgrund des sinkenden Steuerdrucks an dem Steuereingang auf die erste Schaltstellung, sodass der Vorratseingang mit der zweiten Redundanzdruckleitung verbunden ist. Im Fall der Entlüftung der Federspeicher ist somit das Aussteuern eines manuell eingegebenen Redundanzdrucks nicht möglich; der Redundanzdruckanschluss ist mit dem ersten Anschluss des 3/2-Wegeventils verbunden, der in diesem Schaltzustand gesperrt ist.

In einer zweiten Variante ist der erste Anschluss des pneumatisch gesteuerten 3/2-Wegeventils mit einer Drucksenke verbunden. In dieser Variante schaltet das 3/2-Wegeventil zwischen dem Vorratseingang und der Drucksenke hin und her, sodass die zweite Redundanzdruckleitung, die mit dem dritten Anschluss des pneumatisch gesteuerten 3/2-Wegeventils verbunden ist, bei entsprechender Schaltstellung des 3/2-Wegeventils entlüftbar ist. Der Redundanzanschluss kann in dieser Variante über ein zweites Ventil, beispielsweise ein 2/2-Wegeventil, mit der zweiten Redundanzdruckleitung verbunden sein.

Besonders bevorzugt ist, dass der dritte Anschluss des pneumatisch gesteuerten 3/2-Wegeventils mit einem ersten Eingang eines Wechselventils verbunden ist, ein zweiter Eingang des Wechselventils mit dem Redundanzdruckanschluss verbunden ist und ein Ausgang des Wechselventils mit der zweiten Redundanzdruckleitung verbunden ist. Das Wechselventil ist vorzugsweise als sogenanntes Select-High-Ventil ausgebildet mit einem doppelwirkenden Rückschlagventil. Dies bedeutet, an dem Auslass wird stets der höhere Druck, der an dem ersten und zweiten Eingang anliegt, ausgesteuert. In dieser Variante ist es möglich, trotz eingelegter oder teilweise eingelegter Parkbremse, wenn diese beispielsweise als Hilfsbremse verwendet wird, einen Redundanzdruck manuell auszusteuern und den Druck, der durch das pneumatisch gesteuerte 3/2-Wegeventil ausgesteuert wird, über das Wechselventil zu übersteuern. Hierdurch ist es möglich, auf ein weiteres 2/2-Wegeventil oder ein anderes Layout zu verzichten. Ein Wechselventil ist ein relativ kleines Bauteil, welches vorzugsweise mit dem 3/2-Wegeventil integriert ist.

In einer bevorzugten Weiterbildung ist vorgesehen, dass zwischen einem Auslass des pneumatisch gesteuerten Schaltventils und dem Anhängerbremsdruckanschluss ein elektronisches Schaltventil angeordnet ist, sodass bei Verbinden des Federspeicher-Anschlusses mit der Drucksenke ein Aussteuern eines Bremsdrucks an dem Anhängerbremsdruckanschluss unterbunden werden kann. Das elektronische Schaltventil ist vorzugsweise als 3/2-Wegeventil oder 2/2-Wegeventil ausgebildet. Es ist vorzugsweise in einer stromlosen Stellung offen. Durch das elektronische Schaltventil lässt sich der Auslass des pneumatisch gesteuerten Schaltventils sperren. Ist der Auslass gesperrt, wird kein Bremsdruck an dem Anhängerbremsdruckanschluss ausgesteuert. Der Auslass des pneumatisch gesteuerten Schaltventils ist vorzugsweise der dritte Anschluss des pneumatisch gesteuerten 3/2-Wegeventils, wenn das pneumatisch gesteuerte Schaltventil als 3/2-Wegeventil ausgebildet ist.

Die vorstehende Variante ist besonders dann bevorzugt, wenn die Ausführung einer sogenannten "Anhängerkontrollstellung" gewünscht ist. Eine Anhängerkontrollstellung dient dazu zu prüfen, ob der Fahrzeugzug auch ohne eingelegte Betriebsbremsen in dem Anhängerwagen allein durch die Federspeicher im Zugwagen steht. Ist beispielsweise der Fahrzeugzug an einer Stelle mit leichtem Gefälle abgestellt, soll der Fahrer eine Anhängerkontrollstellung einlegen können, um dies zu prüfen. Dies dient der Sicherheit, falls aufgrund einer Leckage die Bremskraft der Betriebsbremsen über die Zeit nachlässt, wenn der Fahrzeugzug über längere Zeit abgestellt ist. Zur Einlegung der "Anhängerkontrollstellung" betätigt der Fahrer vorzugsweise einen entsprechenden Schalter, der über die Steuereinheit (ECU) veranlasst, dass das elektronische Schaltventil geschaltet wird und den Auslass des pneumatisch gesteuerten Schaltventils sperrt. Nach einer vorbestimmten Zeit, bei Ausschalten der Zündung und/oder durch ein entsprechendes Betätigen des beschriebenen Schalters wird das elektronische Schaltventil wieder freigegeben und in die offene Stellung geschaltet, vorzugsweise stromlos, sodass dann an dem Anhängerbremsdruckanschluss ein Bremsdruck ausgesteuert wird, der zum Einlegen der Betriebsbremsen des Anhängers verwendet werden kann.

Eine bevorzugte Ausgestaltung sieht vor, dass die Anhängersteuereinheit ein Relaisventil aufweist, welches einen mit dem Vorratseingang verbundenen Eingang, einen mit dem Anhängerbremsdruckanschluss verbundenen Ausgang, einen Entlüftungsausgang, über den der Ausgang mit einer Drucksenke verbindbar ist, und einen Steuereingang aufweist, der in eine gemeinsame Steuerkammer mündet, wobei der Steuereingang über die Anhängersteuer-Ventileinheit mit dem Vorratseingang und/oder einer Drucksenke verbindbar ist, um einen Bremsdruck am Anhängerbremsdruckanschluss auszusteuern. wobei in die gemeinsame Steuerkammer sowohl ein Betriebsbrems-Steuerdruck, als auch ein Redundanzdruck aussteuerbar sind. Die Anhängersteuer-Ventileinheit weist dazu vorzugsweise ein Einlassventil und ein Auslassventil auf, wobei der Steuereingang mittels des Einlassventils mit dem Vorratseingang verbindbar ist und mittels des Auslassventils mit der Drucksenke verbindbar ist. Einlass- und Auslassventil können jeweils als 2/2-Wegeventil ausgebildet sein, oder sie sind gemeinsam als 3/2-Wegeventil integriert. Durch diesen Aufbau wird ein besonders einfaches Relaisventil verwendet, welches nur eine einzige Steuerkammer aufweist. Es kann vorgesehen sein, dass mehrere Eingänge in diese Steuerkammer münden. Bevorzugt ist aber nur ein einziger Steuereingang vorgesehen.

Vorzugsweise weist das Relaisventil nur eine einzige Steuerkammer auf. Vorzugsweise ist die gemeinsame Steuerkammer des Relaisventils durch einen einzigen Steuerkolben begrenzt. Vorzugsweise weist das Relaisventil auch nur einen einzigen Steuerkolben auf. Hierdurch ist die Bauweise weiter vereinfacht, und Kosten werden reduziert.

In einer bevorzugten Weiterbildung ist die Steuerkammer über ein elektronisch schaltbares Einlassventil mit dem Vorratseingang verbindbar. Vorzugsweise ist die Steuerkammer mit der zweiten Redundanzdruckleitung verbindbar. Hierzu ist es möglich, dass ein weiteres Ventil, beispielsweise ein elektronisch schaltbares 2/2-Wegeventil, vorgesehen ist. Varianten umfassen aber auch ein einfaches T-Stück, einen zweiten Steuereingang, der in dieselbe Steuerkammer mündet, ein 3/2-Wegeventil oder ein Select-High-Ventil.

Gemäß einer weiteren bevorzugten Ausführungsform ist die elektronische Steuereinheit ECU dazu eingerichtet, (1.) die Feststellbrems-Ventileinheit basierend auf einem ersten elektronischen Hilfsbremssignal zu veranlassen, wenigstens ein Ventil der Feststellbrems-Ventileinheit so zu schalten, dass an dem Federspeicher-Anschluss ein Arbeitsdruck zum temporären und gestuften Entlüften des wenigstens einen Federspeichers ausgesteuert wird; und (2.) die Anhängersteuer-Ventileinheit basierend auf dem ersten elektronischen Hilfsbremssignal oder einem zweiten Hilfsbremssignal zu veranlassen, wenigstens ein Ventil der Anhängersteuer-Ventileinheit so zu schalten, dass an dem Anhängerbremsdruckanschluss ein Bremsdruck ausgesteuert wird. Sollen die Federspeicher, die primär als Feststellbremsen bzw. Parkbremsen eingesetzt werden, auch zum Hilfsbremsen unter der Fahrt verwendet werden, werden von der elektronischen Steuereinheit basierend auf einem empfangenen oder ermittelten ersten elektronischen Hilfsbremssignals ein oder mehrere Ventile der Feststellbrems-Ventileinheit so geschaltet, dass die Federspeicher entsprechend teilweise entlüftet werden. Um in diesem Fall auch die Betriebsbremsen des Anhängerwagens zu betätigen, ist die elektronische Steuereinheit vorzugsweise ebenfalls dazu eingerichtet, basierend auf dem ersten elektronischen Hilfsbremssignal oder einem zweiten Hilfsbremssignal, falls ein zweites Hilfsbremssignal, das für Anhängerwagen vorgesehen ist, empfangen oder ermittelt wird, zu veranlassen, wenigstens ein Ventil der Anhängersteuer-Ventileinheit so zu schalten, dass an dem Anhängerbremsdruckanschluss ein Bremsdruck ausgesteuert wird. Der an dem Anhängerbremsdruckanschluss ausgesteuerte Bremsdruck ist vorzugsweise äquivalent zu der Entlüftung der Federspeicher, sodass der Zugwagen und der Anhängerwagen übereinstimmend gebremst werden. In dieser Variante ist eine Hilfsbremsfunktionalität implementiert, wodurch der Fahrzeugzug sicherer ist.

Das erste elektronische Hilfsbremssignal und vorzugsweise das zweite elektronische Hilfsbremssignal, für den Fall, dass es ein zweites elektronisches Hilfsbremssignal gibt, wird vorzugsweise entweder von einem Bedienelement (etwa. Handbremsschalter), von einer Zentraleinheit oder einer übergeordneten Steuereinheit (etwa einer Steuereinheit für autonomes Fahren) bereitgestellt. Beispielsweise wird dieses erste elektronische Hilfsbremssignal über einen CAN-Bus oder LIN-Bus übermittelt.

In einer weiteren bevorzugten Ausführungsform sind die elektronische Steuereinheit, die Anhängersteuereinheit und die Feststellbremseinheit in einem Modul integriert. Als in einem Modul integriert in diesem Sinne wird auch verstanden, wenn die einzelnen Komponenten, also die elektronische Steuereinheit, die Anhängersteuereinheit und/oder die Feststellbremseinheit als Sub-Module ausgebildet sind, die aneinander angeflanscht sind. Vorzugsweise sind diese Komponenten, nämlich mindestens die elektronische Steuereinheit, die Anhängersteuereinheit und die Feststellbremseinheit, in einem gemeinsamen Gehäuse angeordnet. Hierdurch wird insbesondere die Montage und auch der nachträgliche Einbau des elektropneumatischen Steuermoduls gemäß der Erfindung wesentlich vereinfacht. Die Steuereinheit dient dazu, sowohl die Anhängersteuereinheit als auch die Feststellbremseinheit zu steuern und ist lokal mit diesen in einem Gehäuse integriert. Hierzu ist es dann nur erforderlich, anstelle von separaten analogen Vorsteuerleitungen, die direkt von dem Zentralmodul zu der Anhängersteuer-Ventileinheit führen, einen elektrischen Anschluss, beispielsweise einen CAN-Bus-Anschluss, an dem Gehäuse vorzusehen, sowie die entsprechenden pneumatischen Anschlüsse. Hierdurch ist auch die Fehleranfälligkeit wesentlich verringert, da externe Schnittstellen verringert sind.

Ein inverses Relaisventil ist in dem elektropneumatischen Steuermodul vorzugsweise nicht vorgesehen, sondern ein "normales" Relaisventil. Anstelle des Inversteils des Relaisventils ist das pneumatisch gesteuerte Schaltventil vorgesehen. Durch den Entfall des inversen Relaisventils wird der Bauraum des elektropneumatischen Steuermoduls insgesamt verringert, und auch die Komplexität des Relaisventils nimmt ab, wodurch Kosten reduziert werden und auch die Fehleranfälligkeit geringer ist. Darüber hinaus kann ein weiteres elektropneumatisches Ventil in der Feststellbremseinheit (EPH) entfallen, das im Stand der Technik für die "Anhängerkontrollstellung" verwendet wurde.

In einer weiteren bevorzugten Ausführungsform weist das elektropneumatische Steuermodul einen Anschluss zum Empfang eines redundanten elektronischen Betriebs-Bremssignals auf, wobei das elektropneumatische Steuermodul dazu eingerichtet ist, in Abhängigkeit des empfangenen redundanten elektronischen Betriebs-Bremssignals wenigstens ein Ventil der Anhängersteuer-Ventileinheit so zu schalten, dass ein entsprechender Bremsdruck an dem Anhängerbremsdruckanschluss ausgesteuert wird. Das redundante elektronische Bremssignal wird beispielsweise von einem manuell betätigten Bremswertgeber bereitgestellt. Im üblichen Betrieb wird ein elektronisches Bremssignal von einem weiteren Steuergerät, zum Beispiel einem Zentralmodul, bereitgestellt. Für den Fall, dass dieses weitere Steuergerät ausfällt, ist das elektropneumatische Steuermodul gemäß dieser Ausführungsform dazu eingerichtet, ein redundantes elektronisches Bremssignal zu empfangen und dieses zu verwenden. Der Bremswertgeber kann beispielsweise als Bremspedal ausgebildet sein, das elektromechanisch arbeitet und bei dem ein Weggeber aufgrund des Pedalwegs ein entsprechendes elektrisches Signal bereitstellt.

Hierbei ist vorzugsweise vorgesehen, dass das elektropneumatische Steuermodul einen redundanten Drucksensor aufweist, der an der ersten Redundanzdruckleitung oder dem Redundanzdruckanschluss angeordnet ist und dazu ausgebildet ist, den pneumatischen Redundanzdruck an dem Redundanzdruckanschluss oder in der ersten Redundanzdruckleitung zu erfassen und ein entsprechendes Redundanzdrucksignal als das redundante elektronische Betriebs-Bremssignal an der Steuereinheit bereitzustellen. Das von dem redundanten Drucksensor bereitgestellte Redundanzdrucksignal repräsentiert einen Fahrerwunsch, da der Drucksensor den manuell mittels des Bremswertgebers ausgesteuerten Redundanzdruck direkt oder indirekt erfasst. Die Steuereinheit ist vorzugsweise dazu eingerichtet das redundante elektronische Betriebs-Bremssignal, das sie vom Drucksensor empfängt, mit einem Betriebs-Bremssignal zu vergleichen, das die von dem Zentralmodul oder einer weiteren Steuereinheit empfängt. Für den Fall, dass das redundante elektronische Betriebs-Bremssignal eine höhere Verzögerungsanforderung repräsentiert als das von dem Zentralmodul empfangene Betriebs-Bremssignal, veranlasst die Steuereinheit das Schalten wenigstens eines Ventils der Anhängersteuer-Ventileinheit, um basierend auf dem Redundanzdruck die Aussteuerung eines Bremsdrucks am Anhängerbremsdruckanschluss zu ermöglichen. Mit anderen Worten, für den Fall, dass der Fahrer eine stärkere Verzögerung fordert als das Zentralmodul bzw. der weiteren Steuereinheit, wird das Zentralmodul bzw. die weitere Steuereinheit ausgesperrt und der Fahrer übernimmt manuell.

In einer oben beschriebenen Variante, in der der erste Anschluss des 3/2-Wegeventils mit dem Redundanzdruckanschluss und der zweite Anschluss des 3/2-Wegeventils mit dem Vorratseingang verbunden ist, ist vorzugsweise eine Konfigurationseinheit vorgesehen, mit der das elektropneumatische Steuermodul zwischen einer europäischen Anhängerkonfiguration und einer skandinavischen Anhängerkonfiguration konfigurierbar ist.

In der eingangs beschriebenen Variante, in der der erste Anschluss des 3/2-Wegeventils mit dem Redundanzdruckanschluss und der zweite Anschluss des 3/2-Wegeventils mit dem Vorratseingang verbunden ist, ist das elektropneumatische Steuermodul grundsätzlich in der europäischen Anhängerkonfiguration konfiguriert. Das heißt, in einem Zustand, in dem die Federspeicher zugespannt sind, der Federspeicheranschluss also entlüftet ist, wird ein Bremsdruck am Anhängerbremsdruckanschluss ausgesteuert, um die Bremsen des Anhängers in Übereinstimmung mit den Federpeichern des Zugwagens zuzuspannen. Dies soll in der skandinavischen Anhängerkonfiguration nicht der Fall sein.

Um das elektropneumatische Steuermodul der vorliegenden Erfindung einfach zwischen den beiden Konfigurationen, der europäischen Anhängerkonfiguration und der skandinavischen Anhängerkonfiguration, umkonfigurieren zu können, ohne eine komplette Neuentwicklung vorzunehmen, ist gemäß dieser Ausführungsform die Konfigurationseinheit vorgesehen.

In einer erste Variante weist die Konfigurationseinheit eine Druckverteilerplatte auf, die verschieblich oder beweglich ist, um zwischen den genannten Konfigurationen hin- und herschalten zu können. Diese Druckverteilerplatte kann werkseitig eingebaut werden. Es kann auch vorgesehen sein, dass diese Druckverteilerplatte nicht verschieblich ist, sondern einmalig eingebaut wird, aber Anschlüsse so verschaltet, dass einerseits eine europäische Anhängerkonfiguration und andererseits eine skandinavische Anhängerkonfiguration erreichbar ist.

In einer weiteren Variante weist die Konfigurationseinheit ein Schaltschieberventil auf, das zwischen den genannten Konfigurationen hin- und herschalten kann. Ein solches Schaltschieberventil kann vorzugsweise als Push-Pull Ventil ausgebildet sein.

In einer weiteren Variante ist eine Einstellschraube vorgesehen, die entsprechende Durchlässe hat, um pneumatische Anschlüsse so zu verbinden, dass einerseits eine europäische Anhängerkonfiguration, andererseits eine skandinavische Anhängerkonfiguration erreichbar sind.

Im Einzelnen ist die Konfigurationseinheit vorzugsweise zwischen den Vorratseingang, den Redundanzdruckanschluss und das pneumatisch gesteuerte 3/2-Wegeventil geschaltet. Dabei weist die Konfigurationseinheit vorzugsweise einen mit dem Vorratseingang verbundenen ersten Konfigurationsanschluss, einen mit dem Redundanzdruckanschluss verbundenen zweiten Konfigurationsanschluss, und einen mit dem zweiten Anschluss des pneumatisch gesteuerten 3/2-Wegeventils verbundenen dritten Konfigurationsanschluss auf.

In der europäischen Anhängerkonfiguration ist vorzugsweise der erste Konfigurationsanschluss mit dem dritten Konfigurationsanschluss verbunden, sodass letztlich der zweite Anschluss des pneumatisch gesteuerten 3/2-Wegeventils mit dem Vorratseingang verbunden ist. Dies entspricht der oben genannten Grundkonfiguration. Der dritte Konfigurationsanschluss ist geschlossen.

In der skandinavischen Anhängerkonfiguration hingegen, ist der zweite Konfigurationsanschluss vorzugsweise mit dem dritten Konfigurationsanschluss verbunden, während der erste Konfigurationsanschluss geschlossen ist. Das heißt, an dem zweiten Anschluss des pneumatisch gesteuerten 3/2-Wegeventils wird der Redundanzdruck ausgesteuert. Der Redundanzdruck wird also sowohl am ersten als auch am zweiten Anschluss des pneumatisch gesteuerten 3/2-Wegeventils ausgesteuert, sodass dieser schaltungsunabhängig des pneumatisch gesteuerten 3/2-Wegeventils in die zweite Redundanzdruckleitung ausgesteuert wird. Zwar wird dadurch das pneumatisch gesteuerte 3/2-Wegeventil letztlich wirkungslos, aber es lässt sich dasselbe Grundlayout des elektropneumatischen Steuermoduls sowohl für die europäische als auch für die skandinavische Anhängersteuerung verwenden. Es ist lediglich erforderlich, in der Konfigurationseinheit eine andere Konfiguration vorzunehmen, sodass zwischen der Verbindung der Konfigurationsanschlüsse gewechselt werden kann. Gemäß einem zweiten Aspekt der Erfindung wird die eingangs genannte Aufgabe durch einen Zugwagen gelöst, der ein elektropneumatisches Steuermodul nach einer der vorstehend beschriebenen bevorzugten Ausführungsformen eines elektropneumatischen Steuermoduls gemäß dem ersten Aspekt der Erfindung aufweist. Bezüglich der Ausgestaltungen der Ausführungsbeispiele sowie deren Vorteile wird vollumfänglich auf die obige Beschreibung Bezug genommen.

Nachstehend wird die Erfindung anhand von zwei Ausführungsbeispielen unter Bezugnahme auf die beiliegenden Figuren näher erläutert werden. Dabei zeigen:
- Fig. 1: ein schematisches Gesamtlayout eines Bremssystems für einen Fahrzeugzug mit einem erfindungsgemäßen elektropneumatischen Steuermodul;
- Fig. 2: eine schematische Darstellung gemäß dem Stand der Technik mit einer Anhängersteuereinheit und einer Feststellbremseinheit;
- Fig. 3: ein erstes Ausführungsbeispiel eines elektropneumatischen Steuermoduls gemäß der Erfindung;
- Fig. 4: ein zweites Ausführungsbeispiel eines elektropneumatischen Steuermoduls gemäß der Erfindung;
- Fig. 5: ein drittes, detaillierter dargestelltes, Ausführungsbeispiel eines elektropneumatischen Steuermoduls gemäß der Erfindung;
- Fig. 6: ein viertes, detaillierter dargestelltes, Ausführungsbeispiel eines elektropneumatischen Steuermoduls gemäß der Erfindung;
- Fig. 7: eine Darstellung eines Relaisventils;
- Fig. 8: ein schematisches Gesamtlayout eines Bremssystems für einen Fahrzeugzug mit einem erfindungsgemäßen elektropneumatischen Steuermodul gemäß einem fünften Ausführungsbeispiel;
- Fig. 9A: ein erstes Ausführungsbeispiel des elektropneumatischen Steuermoduls mit einer Konfigurationseinheit in einer ersten Schaltstellung (europäische Anhängerkonfiguration);
- Fig. 9B: das elektropneumatische Steuermodul aus Fig. 9A in einer zweiten Schaltstellung (skandinavische Anhängerkonfiguration); und
- Fig. 10: ein zweites Ausführungsbeispiel des elektropneumatischen Steuermoduls mit einer Konfigurationseinheit in einer zweiten Schaltstellung (skandinavische Anhängerkonfiguration).

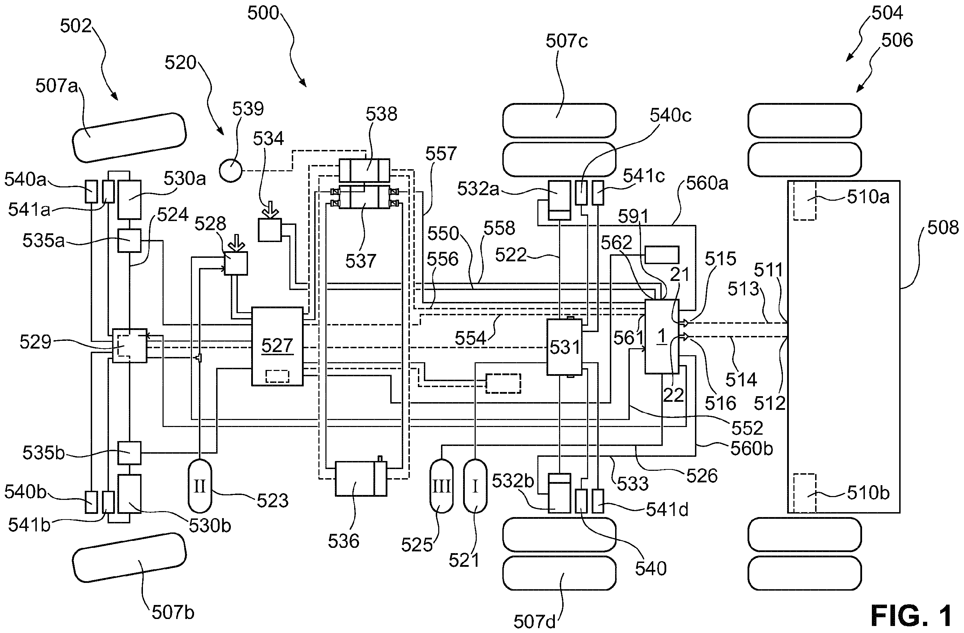

Fig. 1 illustriert zunächst den Gesamtaufbau anhand eines Fahrzeugzugs 500, der einen Zugwagen 502 und einen Anhängerwagen 504 umfasst. Der Anhängerwagen 504 ist hier nur schematisch gezeigt, nämlich nur eine Achse 506 des Anhängerwagens 504. Der Anhängerwagen 504 weist ein nur schematisch dargestelltes Anhänger-Betriebsbremssystem 508 auf, das über entsprechende Anschlüsse 511, 512 und pneumatische Leitungen 513, 514 mit entsprechenden Anschlüssen 515, 516 an dem Zugwagen 502 verbindbar ist. Über den Anschluss 515 ist der Anhängerwagen 504 mit einem Vorrat 525 verbindbar, und über den Anschluss 516 wird ein Bremsdruck weitergegeben. Das Anhänger-Betriebsbremssystem 508 weist schematisch dargestellte Betriebsbremsen 51 0a, 510b auf.

Der Zugwagen 502 weist ein Bremssystem 520 auf, welches einen ersten Vorrat 521 für einen Hinterachsbremskreislauf 522, einen zweiten Vorrat 523 für einen Vorderachsbremskreislauf 524 und einen dritten Vorrat 525 für einen Anhängerbremskreislauf 533 und einen Feststellbremskreislauf beinhaltet.

Als zentrale und übergeordnete Steuereinheit ist ein Zentralmodul 527 vorgesehen, welches rein elektrisch arbeitet. Es ist mit einem elektropneumatischen Bremswertgeber 528 verbunden und steuert das Betriebsbremsen während der Fahrt. Dazu ist das Zentralmodul 527 mit einem Vorderachsmodulator 529, der die Bremskraft in zwei vorderen Betriebsbremsen 530a, 530b steuert, und einem Hinterachsmodulator 531 verbunden, der die Bremskraft in zwei Betriebsbremsen 532a, 532b der Hinterachse steuert. Die Betriebsbremsen 532a, 532b sind hier als sogenannte Tristop-Bremsen ausgebildet und umfassen sowohl übliche pneumatische Bremszylinder als Betriebsbremsen als auch integrierte Federspeicher-Feststellbremsen, wie sie im Folgenden weiter unten genauer beschrieben werden.

Das Bremssystem 520 umfasst in diesem Ausführungsbeispiel auch ein elektropneumatisches Steuermodul 1 gemäß der Erfindung. Zur Ansteuerung einer Feststellbremse in den Betriebsbremsen 532a, 532b weist das Bremssystem 520 ferner einen elektrischen Handbremsschalter 534 auf. In Ausführungsbeispielen, die noch genauer erläutert werden, ist der elektrische Handbremsschalter 534 elektrisch mit dem elektropneumatischen Steuermodul 1 gekoppelt (wie in Fig. 1 gezeigt).

Die weiteren in Fig. 1 gezeigten Elemente sind in diesem Ausführungsbeispiel rein illustrativer Natur und umfassen beispielsweise ABS-Module 535a, 535b, eine Steuereinheit 536 für autonomes Fahren, eine Energiequelle 537 für elektrische Energie, eine SAE-Einheit 538, Lenkwinkel-Sensoren 539 sowie Sensoren 540a, 540b, 540c, 540d für die Bremsbelagverschleißsensierung und Sensoren 541a, 541b, 541c, 541d für die Drehzahl der entsprechenden Räder 507a, 507b, 507c, 507d.

Wie in Fig. 1 zu sehen ist, ist das elektropneumatische Steuermodul 1 über eine Signalleitung 550 mit dem elektrischen Handbremsschalter (HCU) 534 verbunden, über eine Redundanzdruckzufuhrleitung 552 mit dem Bremswertgeber 528, über einen ersten direkten CAN-Bus 554 mit dem Zentralmodul 527, über einen zweiten indirekten CAN-Bus 556 mit der SAE-Einheit 538 also dem Fahrzeugbus (und über diesen wiederum mit dem Zentralmodul 527), über eine Spannungsversorgung 557 mit der Energiequelle 537, über eine Spannungsversorgung 558 mit dem Handbremsschalter 534, und über pneumatische Leitungen 560a, 560b mit den Federspeichern der (Tristop)-Betriebsbremsen 532a, 532b verbunden. Zum Steuern des Anhängerwagens 504 ist das elektropneumatische Steuermodul 1 über einen Anhängerversorgungsdruckanschluss 21 mit dem Anschluss 515 verbunden, der auch als "roter Kupplungskopf" bezeichnet wird und über einen Anhängerbremsdruckanschluss 22 mit dem Anschluss 516, der auch als "gelber Kupplungskopf" bezeichnet wird. Die Anschlüsse und deren Funktion in Bezug auf das elektropneumatische Steuermodul 1 werden im Folgenden näher erläutert werden.

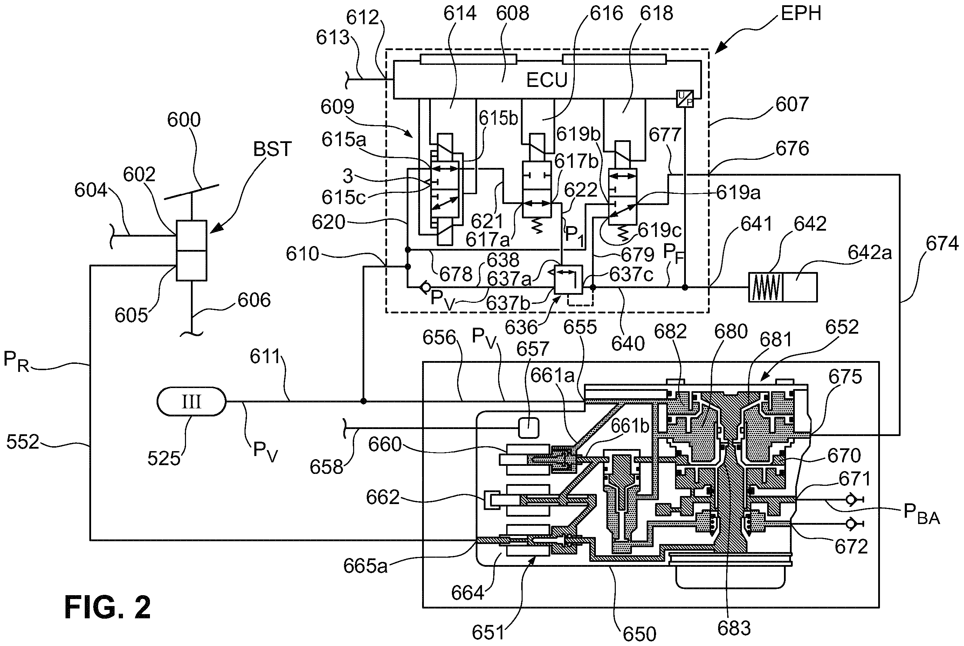

In Fig. 2 ist nun zunächst ein detaillierteres Layout gemäß dem Stand der Technik einer Kombination von einer Anhängersteuereinheit TCV und eine Feststellbremseinheit EPH, die voneinander getrennt sind, dargestellt. Die Übersicht in Fig. 2 zeigt zudem einen elektropneumatischen Bremswertgeber BST mit einem Fußpedal 600, einem elektrischen Weggeber 602, der über eine elektrische Leitung 604 mit einem nicht gezeigten Zentralmodul 527 (vgl. Fig. 1) verbunden ist und einen pneumatischen Ausgang 605 aufweist, der mit einer Redundanzdruckzufuhrleitung 552 verbunden ist. Über eine weitere pneumatische Leitung 606 ist der Bremswertgeber BST mit dem ersten und/oder zweiten Vorrat 521, 523 verbunden. In der pneumatischen Leitung 606 liegt daher ein Vorratsdruck an. Durch Betätigung des Fußpedals 600 wird in der Leitung 552 ein pneumatischer Bremsdruck, nämlich der Redundanzdruck P_{R}, ausgesteuert. Der Redundanzdruck P_{R} ist proportional zu der manuell vorgegebenen Sollverzögerung.

Die Feststellbremseinheit EPH weist ein separates Gehäuse 607 auf, der eine Steuereinheit 608 und eine Feststellbremsventileinheit 609 aufweist. Über einen Vorratseingang 610 ist die Feststellbremseinheit EPH über eine Vorratsleitung 611 ebenfalls mit dem Vorrat 525 verbunden. In der Vorratsleitung 611 liegt wiederum der Vorratsdruck P_{V} an. Die elektronische Steuereinheit 608 der Feststellbremseinheit EPH ist in der gezeigten Ausführungsform über einen elektrischen Anschluss 612 und eine Signalleitung 613 ebenfalls mit dem in der Fig. 2 nicht gezeigten Zentralmodul 527 (vgl. Fig. 1) verbunden, auch wenn andere Verbindungen zusätzlich oder alternativ vorgesehen sein können. Die Steuereinheit 608 ist dazu eingerichtet, die Feststellbremsventileinheit 609 zu steuern. Die Feststellbremsventileinheit 609 weist in diesem zum Stand der Technik gehörenden Ausführungsbeispiel ein bistabiles Ventil 614, ein 2/2-Wegeventil 616 und ein 3/2-Wegeventil 618 auf. Das bistabile Ventil 614 weist einen ersten Anschluss 615a, einen zweiten Anschluss 615b und einen dritten Anschluss 615c auf. Der erste Anschluss 615a ist über eine pneumatische Leitung 620 mit dem Vorratseingang 610 verbunden. Der dritte Anschluss 615c ist mit einer Drucksenke 3 verbunden. Der zweite Anschluss 615b ist über eine pneumatische Leitung 621 mit einem ersten Anschluss 617a des 2/2-Wegeventils 616 verbunden. Das 2/2-Wegeventil 616 ist federbelastet in eine erste offene Schaltposition vorgespannt, sodass es stromlos in der ersten in Fig. 2 gezeigten Schaltposition ist. In der zweiten Schaltposition, die in Fig. 2 nicht gezeigt ist, ist das 2/2-Wegeventil 616 gesperrt. An den zweiten Anschluss 617b des 2/2-Wegeventils ist eine pneumatische Leitung 622 angeschlossen.

Die Feststellbremseinheit EPH weist ferner ein Relaisventil 636 auf, welches mit seinem Steuereingang 637a mit der pneumatischen Leitung 622 verbunden ist. Mit einem Vorratsanschluss 637b ist das Relaisventil 636 über eine pneumatische Leitung 638 mit dem Vorratseingang 610 verbunden, sodass in der pneumatischen Leitung 638 der Vorratsdruck P_{V} anliegt. Ein Arbeitsausgang 637c des Relaisventils 636 ist mit einer Federspeicherleitung 640 verbunden, die zu einem Federspeicher-Anschluss 641 führt, an den ein Federspeicher 642 angeschlossen ist. Es soll verstanden werden, dass in der Praxis mehr als ein Federspeicher 642 angeschlossen werden kann, insbesondere zwei, wie in Fig. 1 in Bezug auf die Tristop-Bremsen 532a, 532b beschrieben. Allgemein können jedoch auch weitere Fahrzeugachsen über Tristop-Bremsen verfügen die ebenfalls über den Federspeicher-Anschluss 641 angesteuert würden.

Im normalen Fahrbetrieb ist der Zylinder 642a des Federspeichers 642 belüftet, und das Bistabilventil 614, und das 2/2-Wegeventil 616 sind in den in Fig. 2 gezeigten Schaltstellungen. An dem Anschluss 615a liegt der Druck P_{V} an, welcher über die Leitung 621, das 2/2-Wegeventil 616 und die Leitung 622 als Steuerdruck P₁ an dem Steuereingang 637a des Relaisventils 636 anliegt. Das Relaisventil 636 steuert dann an dem Arbeitsausgang 637c einen entsprechenden Federspeicher-Arbeitsdruck P_{F} aus, der dazu dient, den Zylinder 642a zu belüften, sodass die Federspeicher 642 gelöst sind. Zum Hilfsbremsen ist es nun möglich, das Bistabilventil 614 in die zweite, in Fig. 2 nicht gezeigte Schaltstellung zu schalten und mittels des 2/2-Wegeventils 616 die Federspeicher 642 gestuft zu entlüften. Hierdurch ist es möglich, eine vorbestimmte Sollverzögerung, die von einem Zentralmodul 527 über die Leitung 613 der Steuereinheit 608 oder über den Handbremsschalter 534 bereitgestellt wird, auszusteuern.

Um auch an einem Anhängerwagen 504 eine entsprechende Verzögerung zu erreichen, ist die Feststellbremseinheit EPH mit der Anhängersteuereinheit TCV gekoppelt.

Die Anhängersteuereinheit TCV weist ein Gehäuse 650, eine Einlass-Auslass-Ventileinheit 651, ein inverses Relaisventil 652 und ein Anhängerabrissventil 654 auf. An dem Gehäuse 650 ist ein Anschluss 655 für eine pneumatische Versorgungsleitung 656 vorgesehen, in der der Vorratsdruck P_{V} anliegt. Über einen elektronischen Anschluss 657 und eine Signalleitung 658 ist die Anhängersteuereinheit TCV mit dem Zentralmodul 527 (in Fig. 2 nicht gezeigt, s. Fig. 1) verbunden und empfängt Steuersignale für die Einlass-Auslass-Ventileinheit 651. Die Einlass-Auslass-Ventileinheit 651 wird direkt von dem Zentralmodul 527 gesteuert. Die Einlass-Auslass-Ventileinheit 651 weist ein Einlassventil 660, ein Auslassventil 662 und ein Redundanzventil 664 auf. Das Redundanzventil 664 ist mit einem ersten Anschluss 665a mit der Redundanzdruckzufuhrleitung 552 verbunden, und an dem Anschluss 665a liegt der Redundanzdruck P_{R} an. Das Einlassventil 660 ist mit einem ersten Anschluss 661a mit dem Anschluss 655 und mit einem zweiten Anschluss 661b mit einer ersten Steuerkammer 670 des inversen Relaisventils 652 verbunden. Zwischen den Anschluss 661b und die Steuerkammer 670 ist das Anhängerabrissventil 654 geschaltet, welches nachfolgend aber nicht im Detail beschrieben wird. Es dient dazu, auch beim Abriss der pneumatischen Leitung 514 zum Anhänger ein sicheres Bremsen zu ermöglichen.

Weiterhin weist die Anhängersteuereinheit TCV einen Anhängerbremsdruckanschluss 671 und einen Anhängerversorgungsdruckanschluss 672 auf. Der Anhängerversorgungsdruckanschluss 672 ist mit dem Anschluss 516 (vgl. Fig. 1) verbunden, während der Anhängerbremsdruckanschluss 671 mit dem Anschluss 515 verbunden ist (vgl. Fig. 1). Über entsprechende Schaltung des Einlassventils 660, des Auslassventils 662 und gegebenenfalls des Redundanzventils 664 kann dann ein gewünschter Bremsdruck P_{BA} für den Anhängerwagen an dem Anschluss 671 ausgesteuert werden.

Um nun auch die Betriebsbremsen 510a, 510b des Anhängerwagens 504 als Feststellbremse zu verwenden, für den Fall, dass mittels der Feststellbremseinheit EPH die Federspeicher 642 entlüftet werden, ist gemäß dem Stand der Technik eine Parkbremsdruckleitung 674 vorgesehen, die von einem Anschluss 675 an der Anhängersteuereinheit TCV zu einem Anschluss 676 an der Feststellbremseinheit EPH läuft. Der Anschluss 676 ist über eine pneumatische Leitung 677 mit einem ersten Anschluss 619a des 3/2-Wegeventils 618 verbunden. Ein zweiter Anschluss 619b des 3/2-Wegeventils 618 ist über eine pneumatische Vorratsleitung 678 mit dem Vorratseingang 610 verbunden, sodass in dieser der Vorratsdruck P_{V} anliegt. Der dritte Anschluss 619c des 3/2-Wegeventils 618 ist über eine Abzweigleitung 679 mit der Federspeicherleitung 640 verbunden, sodass bei der in Fig. 2 gezeigten Schaltstellung des 3/2-Wegeventils 618 an dem Anschluss 675 der Druck des Federspeicheranschlusses 641 ausgesteuert wird.

Da allerdings die Federspeicher 642 invers wirken (das heißt im belüfteten Zustand nicht bremsen und im entlüfteten Zustand bremsen), muss die Funktionalität über das Relaisventil 652 invers ausgebildet sein. Das heißt, bei einem ausgesteuerten Druck am Anschluss 675 soll kein Bremsdruck P_{BA} an dem Anschluss 671 ausgesteuert werden; bei entlüftetem Anschluss 675 soll allerdings ein Bremsdruck P_{BA} an dem Anschluss 671 ausgesteuert werden. Hierzu weist der inverse Relaiskolben 681 eine zweite Steuerkammer 680 auf, die mit dem Anschluss 675 in Verbindung steht. Die zweite Steuerkammer 680 wird begrenzt durch den inversen Relaiskolben 681, der gleichzeitig eine dritte Steuerkammer 682 bilden, an der der Vorratsdruck P_{V} anliegt. Durch entsprechende Gestaltung der Steuerflächen des inversen Relaiskolbens 681 wird der inverse Relaiskolben 681 also bei Anliegen eines Drucks an dem Anschluss 675 so bewegt, dass der Relaiskolben 683 frei agieren kann, während der Relaiskolben 683 bei entlüftetem Anschluss 675 durch den inversen Relaiskolben 681 in Fig. 2 herabgedrückt wird, sodass an dem Anschluss 675 ein Bremsdruck P_{BA} ausgesteuert wird.

Da diese Gestaltung sehr aufwendig ist, hat sich die Erfindung zur Aufgabe gemacht, eine einfachere Lösung anzugeben, bei der insbesondere eine komplexe Anhängersteuereinheit TCV mit einem inversen Relaisventil 652 nicht benötigt wird, insbesondere kein inverser Relaiskolben 681 benötigt wird.

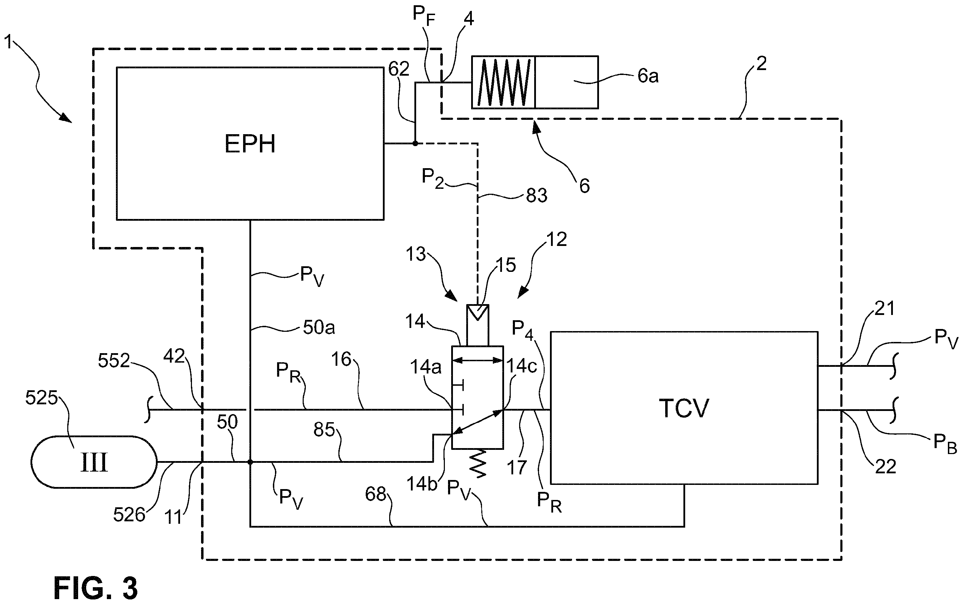

Fig. 3 zeigt ein erstes Ausführungsbeispiel des elektropneumatischen Steuermoduls 1 für ein elektronisch steuerbares pneumatisches Bremssystem 520 für einen Fahrzeugzug 500 mit einem Zugwagen 502 und einem Anhängerwagen 504.

Das elektropneumatisches Steuermodul 1 weist eine Anhängersteuereinheit TCV und eine Feststellbremseinheit EPH auf. Beide sind in ein gemeinsames Gehäuse 2 integriert.

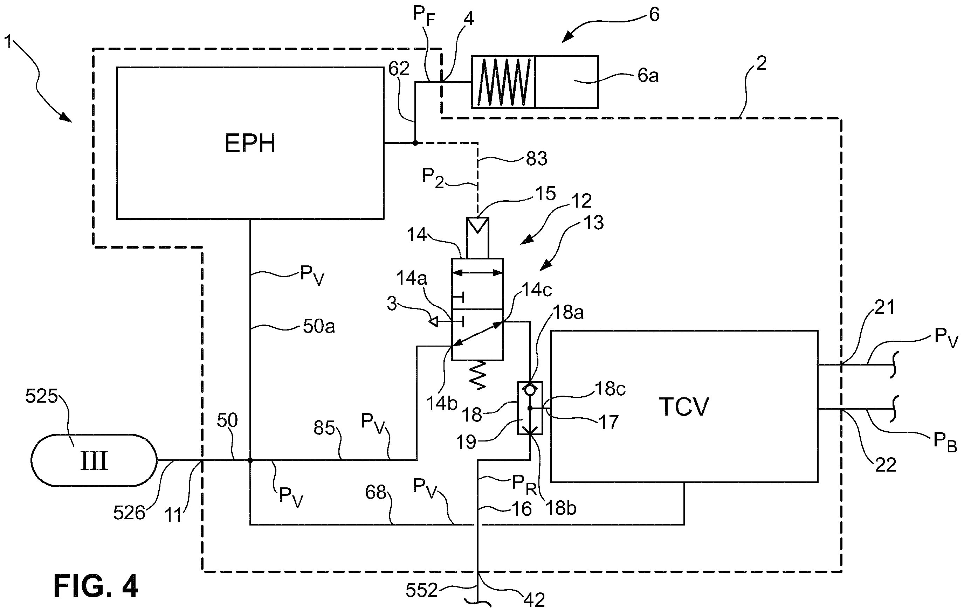

Die Fig. 3 und 4 zeigen zunächst nur schematische Darstellungen, bei denen die Feststellbremseinheit EPH und die Anhängersteuereinheit TCV nur schematisch dargestellt sind, wohl aber in den Fig. 3 und 4 nicht gezeigte Ventile enthalten.

In Fig. 3 sind für das elektropneumatische Steuermodul 1 lediglich die pneumatischen Anschlüsse dargestellt, nämlich der Vorratseingang 11, der über die Vorratszufuhrleitung 526 mit dem dritten Druckluftvorrat 525 verbunden ist, der Redundanzanschluss 42, der über eine Redundanzdruckzufuhrleitung 552 mit einem in Fig. 3 nicht gezeigten Bremswertgeber 528 verbunden ist, der Federspeicheranschluss 4, an dem ein oder mehrere Federspeicher 6 angeschlossen sind sowie der Anhängerversorgungsdruckanschluss 21 und der Anhängerbremsdruckanschluss 22. Im Inneren des Gehäuses 2 verläuft von dem Vorratseingang 11 eine Vorratsverteilleitung 50. Von der Vorratsverteilleitung 50 geht ein erster Abschnitt 50a zur Feststellbremseinheit EPH, um die Feststellbremseinheit EPH mit Vorratsruck P_{V} zu versorgen. Die Feststellbremseinheit EPH ist dazu vorgesehen, in einer Federspeicherleitung 62 einen Federspeicher-Arbeitsdruck P_{F} auszusteuern, der zum Belüften des Zylinders 6a des Federspeichers 6 dient.

Weiterhin verläuft eine dritte Vorratsdruckabzweigleitung 68 zur Anhängersteuereinheit TCV, um die Anhängersteuereinheit TCV mit Versorgungsdruck P_{V} zu versorgen. Die Anhängersteuereinheit TCV dient dazu, an dem Anhängerversorgungsdruckanschluss 21 einen Vorratsdruck P_{V} bereitzustelle sowie am Anhängerbremsdruckanschluss einen Bremsdruck P_{B} auszusteuern, über den Betriebsbremsen 510a, 510b des Anhängerbremssystems 508 eingebremst werden können.

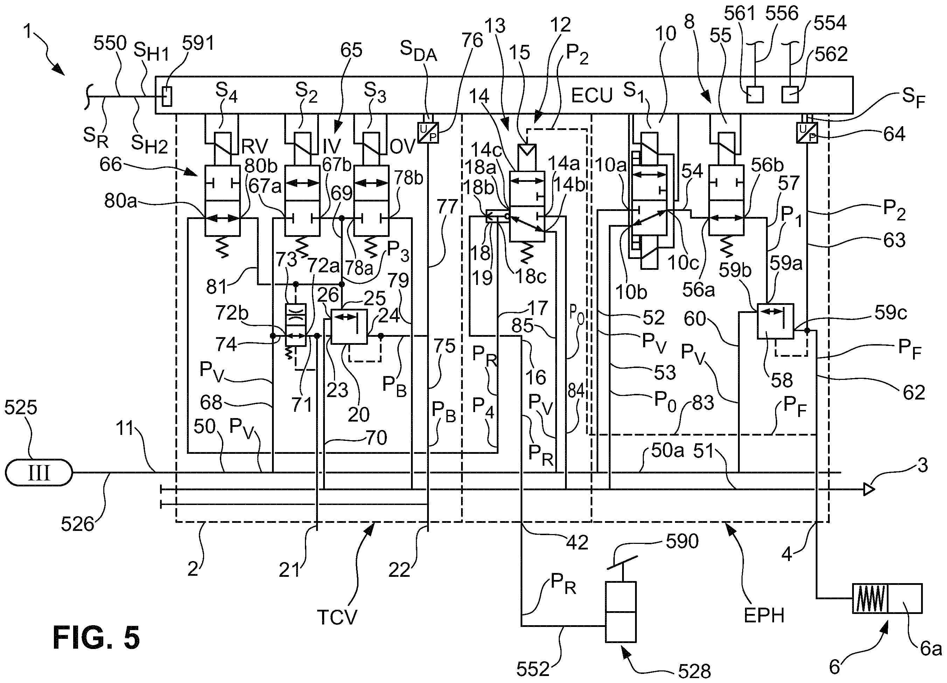

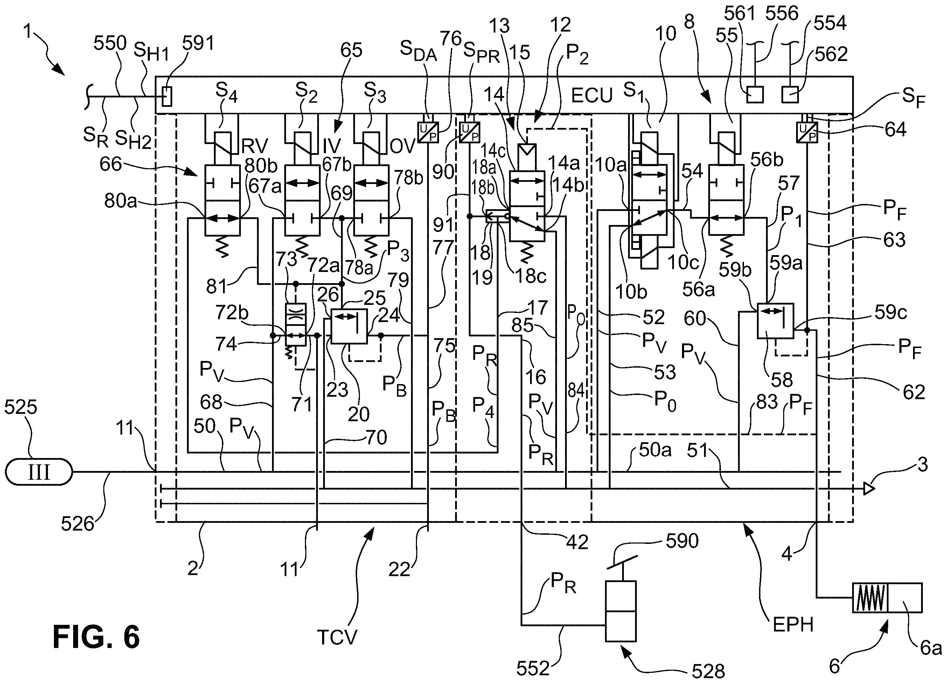

Das genaue Layout der Anhängersteuereinheit TCV und der Feststellbremseinheit EPH können in beliebiger Weise ausgestaltet werden, um die genannten Funktionen zu erfüllen. Ein konkretes Ausführungsbeispiel ist nachstehend mit Bezug auf die Figuren 5 und 6 erläutert.

Die Parkbremsventileinheit 12 dient erfindungsgemäß dazu, basierend auf dem Be-, bzw. Entlüften des Federspeichers 6 einen entsprechenden Bremsdruck P_{B} am Anhängerbremsdruckanschluss 22 auszusteuern, sodass bei Entlüften der Federspeicher 6 der Bremsdruck P_{B} ausgesteuert wird, um die Betriebsbremsen 510a, 510b des Anhängerwagens 504 einzubremsen, um den Anhängerwagen 504 in einer Parkstellung zusätzlich zu bremsen.

Die Parkbremsventileinheit 12 weist ein pneumatisch gesteuertes Schaltventil 13 auf, welches einen pneumatischen Steuereingang 15 zum Aufnehmen eines pneumatischen Steuerdrucks P₂ aufweist, wobei das pneumatisch gesteuerte Schaltventil 13 bei Verbinden des Federspeicheranschlusses 4 mit einer Drucksenke (in Fig. 3 nicht gezeigt; siehe Fig. 5), also bei Entlüften des Federspeichers 6, so geschaltet wird, dass ein Bremsdruck P_{B} an dem Anhängerbremsdruckanschluss 22 aussteuerbar ist.

Der besondere Vorteil liegt hierbei darin, dass kein inverser Relaiskolben verwendet werden muss, sondern das pneumatisch gesteuerte Schaltventil 13 basierend auf dem Steuerdruck P₂, der insbesondere unabhängig von einer Bestromung des Ventils ist, geschaltet wird. Als Steuerdruck P₂ wird gemäß diesem Ausführungsbeispiel vorzugsweise der Federspeicher-Arbeitsdruck P_{F} verwendet, der über eine pneumatische Steuerleitung 83 als Steuerdruck P₂ an dem Steuereingang 15 des pneumatisch gesteuerten Schaltventils 13 anliegt. Die pneumatische Steuerleitung 83 zweigt von der Federspeicherleitung 62 ab.

Das pneumatisch gesteuerte Schaltventil 13 weist einen ersten und einen zweiten Schaltzustand auf, wobei der erste Schaltzustand in Fig. 3 gezeigt ist. Der erste Schaltzustand (in Fig. 3 gezeigt) wird eingenommen, wenn die Federspeicher 6 entlüftet sind, also der Federspeicher-Arbeitsdruck P_{F} gering ist, insbesondere dem Umgebungsdruck entspricht. Der zweite, in Fig. 3 nicht gezeigte Schaltzustand, wird von dem pneumatisch gesteuerten Schaltventil 13 dann eingenommen, wenn der Federspeicher-Arbeitsdruck P_{F} hoch ist, also insbesondere bei belüfteten Federspeichern 6. In der konkreten Ausführungsform gemäß Fig. 3 ist das pneumatisch gesteuerte Schaltventil 13 als 3/2-Wegeventil 14 ausgebildet und weist einen ersten Anschluss 14a, einen zweiten Anschluss 14b und einen dritten Anschluss 14c auf.

Der erste Anschluss 14a ist mit der ersten Redundanzdruckleitung 16 verbunden. Der zweite Anschluss 14b des pneumatisch gesteuerten 3/2-Wegeventils 14 ist mit einer sechsten Versorgungsdruckabzweigleitung 85 verbunden, die mit der Vorratsverteilleitung 50 verbunden ist. Somit liegt am ersten Anschluss 14a der Redundanzdruck P_{R} an und am zweiten Anschluss 14b der Vorratsdruck P_{V}.

Im normalen Fahrbetrieb sind die Federspeicher 6 belüftet und der Steuerdruck P₂ liegt an dem Steuereingang 15 an. Das Schaltventil 13 ist dann in der in Fig. 3 nicht gezeigten zweiten Schaltstellung und der dritte Anschluss 14c ist in Verbindung mit dem ersten Anschluss 14a, sodass der Redundanzdruck P_{R} von dem Redundanzdruckanschluss 42 in die zweite Redundanzdruckleitung 17 ausgesteuert wird. Der Redundanzdruck P_{R} aus der zweiten Redundanzdruckleitung 17 wird dann in der Anhängersteuereinheit TCV verarbeitet (dies wird später im Detail beschrieben werden).

Wird nun der Fahrzeugzug 500 abgestellt und in eine Parkstellung verbracht, werden die Federspeicher 6 aufgrund eines Signals, beispielsweise von dem Handbremsschalter 534, entlüftet. Das Schaltventil 13 schaltet aufgrund des wegfallenden Steuerdrucks P₂ in die drucklose, erste Schaltstellung (in Fig. 3 gezeigt) und in die Redundanzdruckleitung 17 wird der Vorratsdruck P_{V} ausgesteuert. Aufgrund der Druckaussteuerung des Vorratsdrucks P_{V} in der zweiten Redundanzdruckleitung 17 wird in der Folge der Bremsdruck P_{B} an dem Anhängerbremsdruckanschluss 22 ausgesteuert und die Betriebsbremsen 510a, 510b des Anhängerwagens 504 eingelegt.

In diesem Ausführungsbeispiel findet also durch das Schaltventil 13 abhängig von dem Federspeicherarbeitsdruck P_{F} ein automatisiertes Einlegen der Betriebsbremsen 510a, 510b des Anhängerwagens 504 statt.

Fig. 4 zeigt eine Variante zu Fig. 3. Gleiche und ähnliche Elemente sind mit gleichen Bezugszeichen versehen und insofern wird vollumfänglich auf die obige Beschreibung zur Fig. 3 Bezug genommen. Im Nachfolgenden wird insbesondere auf die Unterschiede zwischen dem ersten Ausführungsbeispiel (Fig. 3) und dem zweiten Ausführungsbeispiel (Fig. 4) eingegangen.

Im Unterschied zum ersten Ausführungsbeispiel (Fig. 3) ist in dem zweiten Ausführungsbeispiel (Fig. 4) der erste Anschluss 14a des als 3/2-Wegeventils 14 ausgebildeten Schaltventils 13 nicht mit der ersten Redundanzdruckleitung 16 verbunden, sondern mit einer Drucksenke 3. Der dritte Anschluss 14c ist in Abweichung zum ersten Ausführungsbeispiel nunmehr mit einem ersten Wechselventileingang 18a eines Wechselventils 18 verbunden. Der zweite Wechselventileingang 18b ist mit der ersten Redundanzdruckleitung 16 verbunden. Der Wechselventilausgang 18c mündet dann in die zweite Redundanzdruckleitung 17, die wiederum zur Anhängersteuereinheit TCV führt. Das heißt, in diesem Ausführungsbeispiel münden wiederum sowohl der Vorratseingang 11 als auch der Redundanzanschluss 42 in die zweite Redundanzdruckleitung 17, aber über ein Wechselventil 18. Das Wechselventil 18 ist vorzugsweise als doppelt wirkendes Rückschlagventil 19 ausgebildet und insbesondere als sogenanntes Select-High-Ventil.

Das Wechselventil 18 lässt also für den Fall, dass das 3/2-Wegeventil 14 in der in Fig. 4 gezeigten drucklosen Schaltstellung ist, also zum Beispiel im Fall des Parkens und/oder des Hilfsbremsens, eine Übersteuerung durch einen Bremswertgeber zu, wenn der Redundanzdruck P_{R} größer ist als der von dem 3/2-Wegeventil 14 ausgesteuerte Druck am Anschluss 14c.

Die Figuren 5 und 6 zeigen nun detailliertere Ausführungsbeispiele, in denen insbesondere eine mögliche Realisierung für die einzelnen Ventile der Feststellbremseinheit EPH und der Anhängersteuereinheit TCV sowie die elektronische Steuereinheit ECU mit ihren Anschlüssen gezeigt sind.

In Fig. 5 ist dargestellt, dass in das Gehäuse 2 ferner eine elektronische Steuereinheit ECU integriert ist, die sowohl die Anhängersteuereinheit TCV als auch die Feststellbremseinheit EPH steuert. Die elektronische Steuereinheit ECU weist einen ersten Bus- bzw. Netzwerkanschluss 561, einen zweiten Bus- bzw. Netzwerkanschluss 562 und einen Anschluss 591 für den Handbremsschalter 534 auf, der weiter unten im Detail beschrieben werden wird. Der erste Busanschluss 561 ist über die direkte erste CAN-Busleitung 554 direkt mit dem Zentralmodul 527 verbunden. Der zweite Busanschluss 562 ist über die zweite indirekte CAN-Busleitung 556 mit dem Fahrzeugbus 538 verbunden. Über den zweiten Busanschluss 562 kann die Steuereinheit ECU also auch Signale von der Steuereinheit 536 für autonomes Fahren empfangen.

Das Gehäuse 2 weist einen Vorratseingang 11 auf, der über die pneumatische Vorratszufuhrleitung 526 mit dem dritten Vorrat 525 verbindbar ist. Im Inneren des Gehäuses 2 verläuft von dem Vorratseingang 11 die Vorratsverteilleitung 50, über die verschiedene Elemente mit Vorratsdruck P_{V} versorgt werden. Ebenso verläuft im Inneren des Gehäuses 2 eine Entlüftungsverteilleitung 51, die zu einer Drucksenke 3 führt und über die verschiedene Elemente des elektropneumatischen Steuermoduls 1 entlüftet werden können.

Die Feststellbremseinheit EPH ist in diesem Ausführungsbeispiel ähnlich wie im Stand der Technik (vgl. Fig. 2) ausgebildet und weist eine Feststellbrems-Ventileinheit 8 auf. Es soll verstanden werden, dass die Feststellbremseinheit EPH auch ein anderes Layout verwenden kann. Die Feststellbrems-Ventileinheit 8 weist ein bistabiles Ventil 10 auf. Das bistabile Ventil 10 ist wie im Stand der Technik als 3/2-Wegeventil ausgebildet und weist einen ersten Bistabilventil-Anschluss 10a, einen zweiten Bistabilventil-Anschluss 10b und einen dritten Bistabilventil-Anschluss 10c auf. Der erste Bistabilventil-Anschluss 10a ist über eine erste Vorratsabzweigleitung 52 mit der Vorratsverteilleitung 50 verbunden. Der zweite Bistabilventil-Anschluss 10b ist über eine erste Entlüftungsabzweigleitung 53 mit der Drucksenke 3 verbunden, sodass in der Entlüftungsabzweigleitung 53 Umgebungsdruck P₀ anliegt. Der dritte Bistabilventil-Anschluss 10c ist über eine erste Steuerleitung 54 angeschlossen. Das bistabile Ventil 10 hat eine erste und eine zweite Schaltstellung, wobei in Fig. 5 die erste Schaltstellung dargestellt ist. In der ersten Schaltstellung ist der zweite Bistabilventil-Anschluss 10b mit dem dritten Bistabilventil-Anschluss 10c verbunden, sodass die erste Steuerleitung 54 mit der Drucksenke 3 verbunden und entlüftbar ist. In der zweiten, in Fig. 3 nicht gezeigten, Schaltstellung ist der erste Bistabilventil-Anschluss 10a mit der ersten Steuerleitung 54 verbunden, sodass der Vorratsdruck P_{V} in der ersten Steuerleitung 54 aussteuerbar ist. Die erste Steuerleitung 54 ist weiterhin mit einem ersten Hilfsbremsventilanschluss 56a eines Hilfsbremsventils 55 der Feststellbrems-Ventileinheit 8 verbunden. Das Hilfsbremsventil 55 ist elektronisch schaltbar und mit der ECU verbunden. Es ist in diesem Ausführungsbeispiel als 2/2-Wegeventil ausgebildet und weist neben dem ersten Anschluss 56a einen zweiten Hilfsbremsventilanschluss 56b auf. Es ist stromlos offen ausgebildet. In der in Fig. 5 gezeigten ersten Schaltstellung ist das Hilfsbremsventil 55 offen, und in der zweiten, in Fig. 5 nicht gezeigten Stellung ist das Hilfsbremsventil 55 geschlossen, sodass der erste Hilfsbremsventilanschluss 56a und der zweite Hilfsbremsventilanschluss 56b getrennt sind.

Weiterhin weist die Feststellbrems-Ventileinheit 8 gemäß diesem Ausführungsbeispiel, wie grundsätzlich auch im Stand der Technik bekannt, ein erstes Relaisventil 58 auf. Das erste Relaisventil 58 weist einen Steueranschluss 59a, einen Vorratsanschluss 59b und einen Ausgang 59c auf. Der Steuereingang 59a des ersten Relaisventils 58 ist über eine zweite Steuerleitung 57 mit dem zweiten Hilfsbremsventilanschluss 56b verbunden. Der Vorratsanschluss 59b des ersten Relaisventils 58 ist über eine zweite Vorratsabzweigleitung 60 mit der Vorratsverteilleitung 50, genauer gesagt der Abzweigung 50a, die zur Anhängersteuereinheit EPH führt, verbunden, sodass an dem Vorratsanschluss 59b des ersten Relaisventils 58 der Vorratsdruck P_{V} anliegt. Der Ausgang 59c des ersten Relaisventils 58 ist über eine Federspeicherleitung 62 mit dem Federspeicheranschluss 4 verbunden. Durch entsprechende Schaltung des bistabilen Ventils 10 und des Hilfsbremsventils 55 wird zunächst in der ersten und zweiten Steuerleitung 54, 57 ein erster Steuerdruck P₁ ausgesteuert, der bei vollständig geöffneten Ventilen 10, 55 dem Vorratsdruck P_{V} entspricht. Über das erste Relaisventil 58 wird dann basierend auf dem ersten Steuerdruck P₁ an dem Ausgang 59c ein Federspeicher-Arbeitsdruck P_{F} ausgesteuert, der an dem Federspeicheranschluss 4 bereitgestellt wird. Im normalen Fahrbetrieb ist der Zylinder 6a des Federspeichers 6 belüftet, sodass die Federspeicherbremsen gelöst sind. Es soll verstanden werden, dass an dem Federspeicheranschluss 4 mehr als ein Federspeicher 6 angeschlossen werden kann. Insbesondere können zwei Federspeicher 6 angeschlossen werden, wie dies auch in Fig. 1 in Bezug auf die Tristop-Bremsen 532a, 532b erläutert wurde. Selbstverständlich können auch vier oder mehr Federspeicher 6 angeschlossen werden. Die genaue Anzahl und Konfiguration ist abhängig von der Art des Zugwagens 502, in dem das elektropneumatische Steuermodul 1 eingesetzt wird.

Das Hilfsbremsventil 55 wird zu Hilfsbremszwecken verwendet und erlaubt bei Schaltung des bistabilen Ventils 10 in die in Fig. 5 gezeigte Entlüftungsstellung, nämlich die erste Schaltstellung, ein gestuftes Be- oder Entlüften, indem zunächst das Hilfsbremsventil 55 geschlossen ist und dann gepulst geöffnet wird, sodass der Federspeicher 6 teilweise be- oder entlüftet werden kann.

Zu Regelungszwecken weist die Feststellbremseinheit EPH ferner einen Drucksensor 64 auf, der über eine erste Druckmessleitung 63 mit der Feststellbremsleitung 62 verbunden ist und so den Druck P₂ bzw. P_{F} erfasst. Der Drucksensor 64 stellt dann ein entsprechendes elektronisches Signal S_{F} an der ECU bereit, sodass eine Bremskraftregelung in Bezug auf ein Hilfsbremsen von der ECU ausgeführt werden kann und die ECU das bistabile Ventil 10 und das Hilfsbremsventil 55 entsprechend steuern kann.

Wie insbesondere aus dem Vergleich der Fig. 2 und 5 erkennbar, weist die Feststellbremseinheit EPH gemäß der Erfindung kein 3/2-Wegeventil 618 auf, welches im Stand der Technik (vgl. Fig. 2) dazu verwendet wurde, den ausgesteuerten Feststellbremsdruck P₂ dem Anschluss 675 des inversen Relaisventils 652 bereitzustellen bzw. für die Anhängerkotrollstellung die Betriebsbremse 510a, 510b im Anhängerwagen 504 temporär zu entlüften, was einer Aussteuerung des Vorratsdrucks P_{V} am Ausgang 676 entspricht.

Die Anhängersteuereinheit TCV weist eine Anhängersteuer-Ventileinheit 65 auf. Die Anhängersteuer-Ventileinheit 65 weist wie im Stand der Technik grundsätzlich bekannt eine Einlass-Auslass-Ventileinheit 66, auch als Vorsteuereinheit bezeichnet, auf, die ebenso wie im Stand der Technik bekannt (vgl. Fig. 2) ein Einlassventil IV, ein Auslassventil OV und ein Schaltventil, hier als Redundanzventil RV ausgebildet, aufweist. Ferner weist die Anhängersteuer-Ventileinheit 65 ein zweites Relaisventil 20 auf, welches erfindungsgemäß gerade nicht als inverses Relaisventil ausgebildet ist, sondern als "normales Relaisventil". Das Einlassventil IV ist als 2/2-Wegeventil ausgebildet und weist einen ersten Einlassventil-Anschluss 67a und einen zweiten Einlassventil-Anschluss 67b auf. Der erste Einlassventil-Anschluss 67a ist mit einer dritten Vorratsdruckabzweigleitung 68 verbunden, und der zweite Einlassventil-Anschluss 67b ist mit einer dritten Steuerleitung 69 verbunden. Während in der dritten Vorratsdruckabzweigleitung 68 der Vorratsdruck P_{V} anliegt, ist durch elektrisches Schalten des Einlassventils IV basierend auf einem Signal S₂ von der Steuereinheit ECU in der dritten Steuerleitung 69 ein dritter Steuerdruck P₃ aussteuerbar. Die dritte Steuerleitung 69 ist mit einem Steuereingang 25 des zweiten Relaisventils 20 verbunden. Das Relaisventil 20 weist ferner einen Eingang 23, einen Ausgang 24 und einen Entlüftungsausgang 26 auf. Der Entlüftungsausgang 26 ist über eine zweite Entlüftungsabzweigleitung 70 mit der Entlüftungsverteilleitung 51 und somit mit der Drucksenke 3 verbunden. Der Eingang 23 dient dazu, einen Vorratsdruck P_{V} aufzunehmen und ist zunächst mit einer vierten Vorratsdruckabzweigleitung 71 verbunden, die mit einem ersten Anschluss 72a des Anhängerabrissventils 73 verbunden ist. Das Anhängerabrissventil 73 ist als pneumatisch geschaltetes 2/2-Wegeventil ausgebildet und drucklos offen, in der in Fig. 5 gezeigten Schaltstellung. Bei entsprechender Schaltung des Anhängerabrissventils 73 wird der erste Anschluss 72a des Anhängerabrissventils 73 über eine Drossel mit dem zweiten Anschluss 72b des Anhängerabrissventils 73 verbunden, welcher wiederum über eine fünfte Vorratsdruckabzweigleitung 74 mit der dritten Vorratsdruckabzweigleitung 68 verbunden ist. Im normalen Betrieb ist das Anhängerabrissventil 73 allerdings in der in Fig. 5 gezeigten Stellung, sodass an dem Eingang 23 der Vorratsdruck P_{V} anliegt.

Empfängt nun das Relaisventil 20 den Steuerdruck P₃ an dem Steuereingang 25, steuert das Relaisventil 20 an dem Ausgang 24 einen entsprechenden Bremsdruck P_{B} aus und stellt diesen über eine Anhängerbremsdruckleitung 75 an dem Anhängerbremsdruckanschluss 22 bereit. Für eine entsprechende Druckregelung ist ein Bremsdrucksensor 76 für die Anhängersteuereinheit TCV vorgesehen, der über eine Bremsdruckmessleitung 77 mit der Anhängerbremsdruckleitung 75 verbunden ist und ein entsprechendes Drucksignal S_{DA} an der Steuereinheit ECU bereitstellt.

Das Auslassventil OV ist elektropneumatisch geschaltet und beim Empfang eines Signals S₃ von der Steuereinheit ECU von dem ersten in Fig. 5 gezeigten Schaltzustand, bei dem es geschlossen ist, in einen offenen Schaltzustand, der in Fig. 5 nicht gezeigt ist, versetzbar. Stromlos ist das Auslassventil OV geschlossen.

Zur Entlüftung der Bremsen und somit zur Reduktion eines Bremsdrucks P_{B} ist das Auslassventil OV vorgesehen. Das Auslassventil OV ist ebenso wie das Einlassventil IV als 2/2-Wegeventil vorgesehen und weist einen ersten Auslassventilanschluss 78a und einen zweiten Auslassventilanschluss 78b auf. Der erste Auslassventilanschluss 78a ist mit der dritten Steuerleitung 69 verbunden und der zweite Auslassventilanschluss 78b mit einer dritten Entlüftungsabzweigleitung 79. Die dritte Entlüftungsabzweigleitung 79 verläuft von dem zweiten Auslassventil-Anschluss 78b zu der Entlüftungsverteilleitung 51 und somit zur Drucksenke 3.

In einer Variante sind Einlass- und Auslassventil IV/OV integriert und als 3/2-Wegeventil ausgebildet, wobei ein erster Anschluss mit der Leitung 68 verbunden ist, ein zweiter Anschluss mit der Leitung 69 und ein dritter Anschluss mit der Leitung 79.

Um in einem Fehlerfall, in dem von der Steuereinheit ECU keine Signale S₂, S₃ bereitgestellt werden und Einlass- und Auslassventil IV, OV stromlos sind manuell den im Regelfall von der Steuereinheit ECU ausgesteuerten Bremsdruck P_{B}, ersetzen zu können, weist das elektropneumatische Steuermodul 1 gemäß der Erfindung einen Redundanzanschluss 42 auf. An den Redundanzanschluss 42 ist über eine Redundanzdruckzufuhrleitung 552 ein Bremswertgeber 528 angeschlossen Der Bremswertgeber 528 ist identisch zu dem BST aus Fig. 2 gemäß dem Stand der Technik ausgebildet. An den Redundanzanschluss 42 ist im Inneren des Gehäuses 2 eine erste Redundanzdruckleitung 16 angeschlossen. Weiterhin ist die erste Redundanzdruckleitung 16 an dem zweiten Eingang 18b eines Wechselventils 18 angeschlossen (vgl. auch zweites Ausführungsbeispiel gem. Fig. 4). Das Wechselventil 18 ist dazu eingerichtet, zwischen dem ersten Eingang 18a und dem zweiten Eingang 18b, an den die erste Redundanzdruckleitung 16 angeschlossen ist, hin und her zu schalten. Das Wechselventil 18 kann also grundsätzlich als 3/2-Wegeventil verstanden werden. Der Ausgang 18c des Wechselventils 18 ist mit einer zweiten Redundanzdruckleitung 17 verbunden. Die Redundanzdruckleitung 17 verläuft zu einem ersten Redundanzventilanschluss 80a. Der zweite Redundanzventilanschluss 80b ist mit einer Redundanzdrucksteuerleitung 81 verbunden, die in die dritte Steuerleitung 69 mündet und somit in den Steuereingang 25 des zweiten Relaisventils 20. Das Redundanzventil RV ist als 2/2-Wegeventil ausgebildet und weist eine erste und eine zweite Schaltstellung auf, wobei es in Fig. 5 in der ersten offenen Schaltstellung gezeigt ist.

Das Redundanzventil RV ist stromlos offen und dient dazu auch im Fehlerfall, bei dem die Einlass-Auslass-Ventileinheit 66 stromlos ist, einen Bremsdruck P_{B} aussteuern zu können. Wird im Fehlerfall durch Betätigen des Pedals 590 ein Redundanzdruck P_{R} in der Redundanzdruckzufuhrleitung 552 ausgesteuert, wird dieser Redundanzdruck P_{R} über die erste Redundanzdruckleitung 16, das Wechselventil 18, die zweite Redundanzdruckleitung 17, das offene Redundanzventil RV und die Redundanzdrucksteuerleitung 81 an dem Steuereingang 25 des Relaisventils 20 bereitgestellt. An dem Ausgang 24 des zweiten Relaisventils 20 wird in der Folge der Bremsdruck P_{B} ausgesteuert.

Zur Verknüpfung der Anhängersteuereinheit TCV und der Feststellbremseinheit EPH um, wie bereits im Stand der Technik bekannt, die Betriebsbremsen 510a, 510b des Anhängerwagens 504 auch als Parkbremsen zu verwenden und so im Parkzustand an dem Anhängerbremsdruckanschluss 22 einen Bremsdruck P_{B} auszusteuern, während die Federspeicher 6 entlüftet sind, ist gemäß der Erfindung die Parkbremsventileinheit 12 vorgesehen mit dem pneumatisch gesteuerten Schaltventil 13, welches einen pneumatischen Steuereingang 15 zum Aufnehmen eines pneumatischen Steuerdrucks P₂ aufweist, wobei das pneumatisch gesteuerte Schaltventil 13 bei Verbinden des Federspeicher-Anschlusses 4 mit der Drucksenke 3, also bei Entlüften des Federspeichers 6, so geschaltet wird, dass ein Bremsdruck P_{B} an dem AnhängerbremsdruckAnschluss 22 aussteuerbar ist.

Als Steuerdruck wird vorzugsweise der Druck an dem Federspeicheranschluss 4 verwendet, also der Federspeicher-Arbeitsdruck P_{F}. Dies ist in der konkreten Ausführungsform, die in Fig. 5 dargestellt ist, gelöst durch eine pneumatische Steuerleitung 83, die die Federspeicherleitung 62 mit dem Steuereingang 15 des pneumatisch gesteuerten Schaltventils 13 verbindet und den Federspeicher-Arbeitsdruck P_{F} als Steuerdruck P₂ und dem Steuereingang 15 bereitstellt. Das heißt, am Steuereingang 15 des pneumatisch gesteuerten Schaltventils 13 liegt der Federspeicher-Arbeitsdruck P_{F} des Federspeicher-Anschlusses 4 und somit der Federspeicher 6 an.

In einer Variante kann die Steuerleitung 83 aber auch mit beispielsweise der Leitung 57 verbunden sein. In diesem Fall wird als Steuerdruck am Steuereingang 15 der Druck P₁ verwendet.

Das pneumatisch gesteuerte Schaltventil 13 weist (vgl. auch Fig. 3 und 4) einen ersten und einen zweiten Schaltzustand auf, wobei der erste Schaltzustand in Fig. 5 gezeigt ist. Der erste Schaltzustand (in Fig. 5 gezeigt) wird eingenommen, wenn die Federspeicher 6 entlüftet sind, also der Federspeicher-Arbeitsdruck P_{F} und somit auch der zweite Steuerdruck P₂ gering ist, insbesondere dem Umgebungsdruck P₀ entspricht. Der zweite, in Fig. 5 nicht gezeigte Schaltzustand, wird von dem pneumatisch gesteuerten Schaltventil 13 dann eingenommen, wenn der zweite Steuerdruck P₂ hoch ist, also insbesondere bei belüfteten Federspeichern 6. In der konkreten Ausführungsform gemäß Fig. 5 ist das pneumatisch gesteuerte Schaltventil 13 als 3/2-Wegeventil 14 ausgebildet und weist einen ersten Anschluss 14a, einen zweiten Anschluss 14b und einen dritten Anschluss 14c auf. Der erste Anschluss 14a ist über eine vierte Entlüftungsabzweigleitung 84 mit der Entlüftungsverteilleitung 51 verbunden und somit mit der Drucksenke 3. Der zweite Anschluss 14b des pneumatisch gesteuerten 3/2-Wegeventils 14 ist mit einer sechsten Versorgungsdruckabzweigleitung 85 verbunden, die mit der Vorratsverteilleitung 50 verbunden ist. Somit liegt am ersten Anschluss 14a Umgebungsdruck P₀ an und am zweiten Anschluss 14b der Vorratsdruck P_{V}.

Im normalen Fahrbetrieb sind die Federspeicher 6 belüftet, und somit ist das pneumatisch gesteuerte 3/2-Wegeventil 14 in der zweiten (nicht gezeigten) Schaltstellung, und an dem dritten Anschluss 14c wird der Umgebungsdruck P₀ ausgesteuert.

Wird nun der Federspeicher 6 entlüftet, sei es aufgrund der Einnahme einer Parkstellung oder aufgrund einer Hilfsbremsung mittels der Federspeicher 6, wird zunächst das bistabile Ventil 10 in die in Fig. 5 gezeigte erste Schaltstellung geschaltet, sodass der Steueranschluss 59a des ersten Relaisventils 58 drucklos geschaltet wird und in Folge der Federspeicheranschluss 4 über den Ausgang 59c des ersten Relaisventils 58 entlüftet wird; der Federspeicher-Arbeitsdruck P_{F} sinkt ab. In dieser Folge wird auch der Steuerdruck P₂ geringer, und das pneumatisch gesteuerte 3/2-Wegeventil 14 schaltet in die in Fig. 5 gezeigte erste Schaltstellung. Folglich wird an dem dritten Anschluss 14c nun ein entsprechender Druck P₄ ausgesteuert, der dem Versorgungsdruck P_{V} entspricht. Der dritte Anschluss 14c ist mit dem ersten Eingang 18a des Wechselventils 18 verbunden. Das Wechselventil 18 ist insbesondere als doppelt wirkendes Rückschlagventil 19 ausgebildet, also als sogenanntes Select-High-Ventil. Der jeweils höhere Druck an den Anschlüssen 18a, 18b wird an dem Ausgang 18c ausgesteuert. Ist also in dem beschriebenen Fall der an dem dritten Anschluss 14c ausgesteuerte Druck P₄ größer als der in der Redundanzdruckleitung 16 ausgesteuerte Druck P_{R}, wird in der zweiten Redundanzdruckleitung 17 der Druck P₄ ausgesteuert.

In einer Variante wird das Redundanzventil RV bereits in diesem Status stromlos geschaltet und somit geöffnet und in der Folge liegt an dem Steuereingang 25 des Relaisventils 20 der vierte Steuerdruck P₄ an. Auf diese Weise wird ein entsprechender Bremsdruck P_{B} an dem Anhängerbremsdruckanschluss 22 ausgesteuert.

In einer bevorzugten Variante allerdings, ist bei Beginn des Parkens das Redundanzventil RV zunächst mit dem Signal S₄ bestromt und geschlossen; der von dem Schaltventil 13 ausgesteuerte Druck P₄ wird zunächst ausgesperrt. Das Einlegen der Betriebsbremsen 510a, 510b des Anhängerwagens 504 wird zu Beginn des Parkens über die Einlass-Auslass-Ventileinheit 66, die von der Steuereinheit ECU entsprechend geschaltet wird, realisiert. D.h. Wenn beispielsweise der Handbremsschalter 534 betätigt wird, bleibt das Redundanzventil RV zunächst geschlossen. Die Steuereinheit ECU schaltet aber das Einlassventil IV so, dass der dritte Steuerdruck P₃ an dem Relaisventil-Steuereingang 25 anliegt und ein entsprechender Bremsdruck P_{B} an dem Anhängerbremsdruckanschluss 22 ausgesteuert wird, während die Federspeicher 6 nach und nach entlüftet werden und ihre Bremskraft entfalten. Sobald die Federspeicher 6 zu einem gewissen Grad entlüftet sind, oder vollständig entlüftet sind, werden alle Ventile RV, IV, OV der Einlass-Auslass-Ventileinheit 66 stromlos geschaltet; das Einlassventil IV schließt, während das Redundanzventil RV geöffnet wird. Nun liegt über das Schaltventil 13 und das Redundanzventil RV der vierte Steuerdruck P₄ an dem Relaisventil-Steuereingang 25 an und der Bremsdruck P_{B} wird ausgesteuert; die Betriebsbremsen 510a, 510b des Anhängerwagens 504 bleiben eingelegt.

Es soll verstanden werden, dass es nicht zwingend erforderlich ist, dass der dritte Anschluss 14c des pneumatisch gesteuerten 3/2-Wegeventils 14 letztlich in die zweite Redundanzdruckleitung 17 mündet. Ebenso ist es denkbar, dass der dritte Anschluss 14c über ein separates Schaltventil direkt an einer separaten pneumatischen Leitung mit dem Steuereingang 25 des Relaisventils 20 oder mit einem zweiten nicht gezeigten Steuereingang des Relaisventils 20 verbunden ist. Der Vorteil des Wechselventils 18 liegt darin, dass Überbremsen verhindert werden kann, da entweder der Redundanzdruck P_{R} oder der an dem dritten Anschluss 14c ausgesteuerte Druck P₄ an den Steuereingang 25 gelangt.

Ein weiterer Vorteil liegt darin, dass das Redundanzventil RV dazu verwendet werden kann, eine Anhängerkontrollstellung einzunehmen. Die Anhängerkontrollstellung ist erforderlich, um zu prüfen, ob der Fahrzeugzug 500 im abgestellten Parkzustand auch ohne eingelegte Betriebsbremsen 510a, 510b des Anhängerwagens 504 sicher hält. Dazu betätigt der Fahrzeugführer die Anhängerkontrollstellung und wartet eine vorbestimmte Zeit, beispielsweise drei Minuten, ab, um zu prüfen, ob der Fahrzeugzug 500 allein aufgrund der Federspeicher 6 sicher steht. In der Anhängerkontrollstellung ist es daher wichtig, dass trotz eingelegter Feststellbremse, also entlüfteter Federspeicher 6, die Betriebsbremsen 510a, 510b des Anhängerwagens 504 nicht betätigt werden, also kein Bremsdruck P_{B} an dem Anhängerbremsdruckanschluss 22 ausgesteuert wird.

Zu diesem Zweck wird in der Anhängerkontrollstellung das Redundanzventil RV durch ein elektrisches Signal S₄ in den zweiten in Fig. 5 nicht gezeigten Schaltzustand versetzt und die Aussteuerung des vierten Steuerdrucks P₄ an dem Steuereingang 25 gesperrt. In diesem Fall wird trotz Schalten des pneumatisch gesteuerten 3/2-Wegeventils 14 und Schalten des Wechselventils 18 kein vierter Steuerdruck P₄ an dem Steuereingang 25 ausgesteuert. Auch ein Redundanzdruck P_{R} kann an dem Steuereingang 25 des Relaisventils 20 nicht ausgesteuert werden.

Die elektrische Steuereinheit ECU weist in diesem Ausführungsbeispiel ferner einen elektronischen Anschluss 591 zum Empfang eines redundanten elektronischen Bremssignals S_{R} auf. Der Anschluss 591 ist mit der Signalleitung 550 verbunden, die zum Handbremsschalter (HCU) 534 führt. Das vom Handbremsschalter gelieferte Signal wird als redundanten elektronisches Bremssignal S_{R} an der Steuereinheit ECU empfangen.

Basierend auf dem empfangenen redundanten Bremssignal S_{R} ist die Steuereinheit ECU dazu eingerichtet, ein entsprechendes Signal S₂ an das Einlassventil IV zu senden, sodass ein Steuerdruck P₃ an dem Steuereingang 25 des Relaisventils 20 ausgesteuert wird, um so einen Bremsdruck P_{B} an dem Anhängerbremsdruckanschluss 22 auszusteuern. Hierdurch wird eine elektronisch ausgesteuerte Hilfsbremsung möglich.

In Fig. 6 ist ein viertes bevorzugtes Ausführungsbeispiel der Erfindung illustriert. Gleiche und ähnliche Elemente sind mit gleichen Bezugszeichen versehen, und insofern wird vollumfänglich auf die obige Beschreibung zu den Fig. 1 und 3 bis 5 Bezug genommen. Im Folgenden wird im Wesentlichen auf die Unterschiede eingegangen.

Der einzige Unterschied zwischen dem dritten und vierten Ausführungsbeispiel liegt in einem redundanten Drucksensor 90. Der redundante Drucksensor 90 ist über eine Redundanzdruckmessleitung 91 mit der ersten Redundanzdruckleitung 16 verbunden. Folglich misst der redundante Drucksensor 90 den Druck P_{R} in der ersten Redundanzdruckleitung 16, der manuell durch Betätigung des Bremspedals 590 an dem Redundanzdruckanschluss 42 ausgesteuert wird. Mit Bezug auf das erste, zweite und dritte Ausführungsbeispiel (Fig. 1, 3, 4, 5) wurde bereits beschrieben, wie der manuell ausgesteuerte Redundanzdruck P_{R} über die erste Redundanzdruckleitung 16, das Wechselventil 18, die zweite Redundanzdruckleitung 17, das Redundanzventil RV, die Redundanzdrucksteuerleitung 81 und das Relaisventil 20 zu einem am Anhängerbremsdruckanschluss 22 ausgesteuerten Bremsdruck P_{B} führt. Ebenso wurde beschrieben, dass der Handbremsschalter 534 einen ein redundantes elektrisches Betriebs-Bremssignal S_{R} an dem Anschluss 591 der Steuereinheit ECU bereitgesellen kann.

Zur Erkennung einer Fahrerinteraktion bei autonomer Steuerung des Bremssystems 520, kann der redundante Drucksensor 90 genutzt werden. Der redundante Drucksensor 90 misst den manuell ausgesteuerten Redundanzdruck P_{R} und stellt ein entsprechendes Signal S_{PR}, vorzugsweise als redundantes elektronische Betriebs-Bremssignal S_{R}, an der Steuereinheit ECU bereit.

Das von dem redundanten Drucksensor 90 bereitgestellte Redundanzdrucksignal S_{PR} repräsentiert einen Fahrerwunsch, da der Drucksensor 90 den manuell mittels des Bremswertgebers 528 ausgesteuerten Redundanzdruck P_{R} erfasst. Die Steuereinheit ECU ist vorzugsweise dazu eingerichtet das Signal S_{PR}, das sie vom Drucksensor 90 empfängt, mit einem Betriebs-Bremssignal, das sie beispielsweise von der Steuereinheit 536 für autonomes Fahren über den zweiten CAN-Bus 554 empfängt, zu vergleichen. Für den Fall, dass das redundante elektronische Betriebs-Bremssignal S_{R} bzw. das Drucksignal S_{PR} eine höhere Verzögerungsanforderung repräsentiert als das von der Steuereinheit 536 empfangene Betriebs-Bremssignal, veranlasst die Steuereinheit ECU das Schalten des Redundanzventils RV, um basierend auf dem Redundanzdruck P_{R} die manuelle Aussteuerung eines Bremsdrucks P_{B} am Anhängerbremsdruckanschluss 22 zu ermöglichen. Mit anderen Worten, für den Fall, dass der Fahrer eine stärkere Verzögerung fordert als das Zentralmodul 527 oder die Steuereinheit 536 für autonomes Fahren, wird das Zentralmodul ausgesperrt und der Fahrer übernimmt manuell.

Fig. 6 illustriert das zweite Relaisventil 20 in pneumatischer Querschnittsdarstellung. Das Relaisventil 20 weist den Steuereingang 25, den Eingang 23, an den die vierte Abzweigleitung 71 der Vorratsverteilleitung 50 angeschlossen ist, und an dem somit der Druck P_{V} anliegt, einen Ausgang 24, der über die Bremsdrucksteuerleitung 75 mit dem Anhängerbremsdruckanschluss 22 verbunden ist und über den der Bremsdruck P_{B} ausgesteuert wird, sowie einen Entlüftungsausgang 26, über den der Ausgang 24 entlüftet werden kann, und der mit der Drucksenke 3 verbunden ist. An dem Entlüftungsausgang 26 liegt folglich ein Druck P₀ an, der dem Druck der Drucksenke, insbesondere der Umgebung, entspricht. Der Entlüftungsausgang 26 läuft in diesem Ausführungsbeispiel über einen Geräuschdämpfer 130, der nicht im Detail gezeigt ist, im Stand der Technik aber bekannt ist.

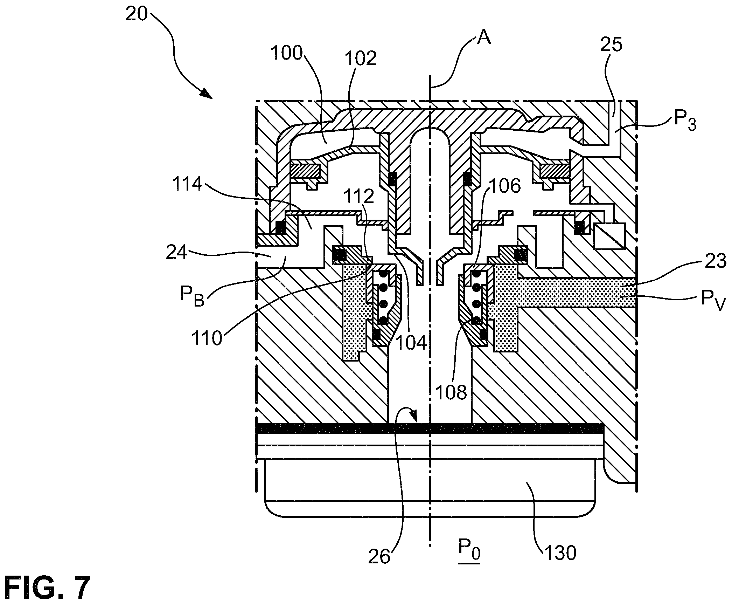

Wie sich insbesondere aus Fig. 7 ergibt, weist das Relaisventil 20 eine gemeinsame Steuerkammer 100, in diesem Ausführungsbeispiel eine einzige Steuerkammer 100, auf, in die der einzige Steuereingang 25 mündet. Über den Steuereingang 25 sind sowohl der Steuerdruck P₃, als auch Redundanzdruck P_{R} in die gemeinsame Steuerkammer 100 aussteuerbar; insofern ist für die beiden Steuerdrücke P₃, P_{R} nur eine gemeinsame Steuerkammer 100 vorgesehen. Die Steuerkammer 100 erfüllt somit zwei Funktionen: zum einen ist mittels der Steuerkammer 100 der Bremsdruck P_{B} in Abhängigkeit des Betriebsbrems-Steuerdruck P₁ aussteuerbar, zum anderen ist mittels der Steuerkammer 100 der Bremsdruck P_{B} auch in Abhängigkeit des Redundanzdrucks P_{R} aussteuerbar.

Es kann vorgesehen sein, dass weitere Steuereingänge in die Steuerkammer 100 münden. Die Steuerkammer 100 wirkt auf einen einzigen Steuerkolben 102. Der einzige Steuerkolben 102 ist axial gleitend entlang einer Achse A geführt. Bei Belüftung des Steuereingangs 25 mit dem Steuerdruck P₃ kann sich der Kolben 102 in Bezug auf Fig. 7 nach unten bewegen und kommt mit einem Ventilsitz 104 in Kontakt mit einem entsprechenden Schiebering 106, der federbelastet in die axial obere Stellung geschoben ist. Dazu ist eine Spiralfeder 108 vorgesehen. Der Schiebering 106 weist einen zweiten Ventilsitz 110 auf, der gegen einen Vorsprung 112 abdichtet und somit den Eingang 23 zunächst geschlossen hält.

Der Steuerkolben ist in Fig. 7 in einer offenen Stellung gezeigt. In seiner Abschlussstellung ist der Ventilsitz 104 in Kontakt mit dem Schiebering 106. In der Abschlussstellung sind sowohl der Eingang 23, als auch der Ausgang 24 gegenüber dem Entlüftungsausgang 26 abgeschlossen.

Aufgrund des ausgesteuerten Drucks P₃ wirkt eine Kraft auf den Steuerkolben 102, die zum Öffnen des Ventilsitzes 110 führt, sodass der Druck P_{V} in den Arbeitsraum 114 überspringen kann. Der Druck in dem Arbeitsraum 114 steigt an und führt zu einer Gegenkraft auf den Steuerkolben 102, sodass sich der Steuerkolben wieder in die Abschlussstellung bewegt. Entsprechend wird ein Bremsdruck P_{B} an dem Ausgang 24 ausgesteuert und dort gehalten. Dieser Aufbau ist wesentlich einfacher als der mit Bezug auf Fig. 2 beschriebene inverse Relaiskolben.

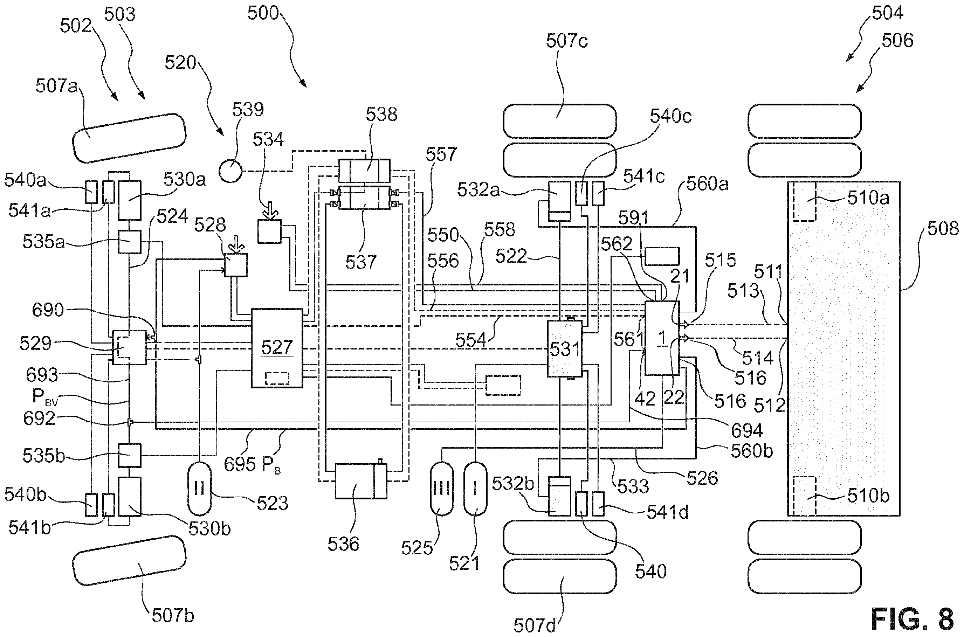

Figur 8 zeigt nun ein fünftes Ausführungsbeispiel. Grundsätzlich ähnelt das in Figur 8 gezeigte Bremssystem 520 demjenigen gemäß Figur 1 und gleiche und ähnliche Elemente sind mit gleichen Bezugszeichen versehen. Insofern wird vollumfänglich auf die obige Beschreibung der Fig.1 Bezug genommen. Im Folgenden wird daher im Wesentlichen auf die Unterschiede eingegangen.

Im Unterschied zum ersten Ausführungsbeispiel ist der Redundanzanschluss 42 nicht mit über die Redundanzdruckzufuhrleitung 552 mit dem Bremswertgeber 528 verbunden; vielmehr wird an dem Redundanzanschluss 42 der Bremsdruck einer anderen Fahrzeugachse, in diesem Ausführungsbeispiel der Vorderachs-Bremsdruck P_{BV}, ausgesteuert. Dazu ist eine zweite Redundanzdruckzufuhrleitung 694 vorgesehen, die über ein T-Stück 692 mit einer Vorderachs-Bremsdruckleitung 693 verbunden ist. Über diese zweite Redundanzdruckzufuhrleitung 694 wird der Vorderachs-Bremsdruck P_{BV} der Betriebsbremsen 530a, 530b der Vorderachse 503 an dem Redundanzdruckanschluss 42 ausgesteuert.

Der Bremswertgeber 528 ist dann abweichend zum ersten Ausführungsbeispiel (Fig. 1) über ein Vorderachs-Wechselventil 690 mit dem Vorderachsmodulator 529 verbunden, um den Bremswertgeber-Steuerdruck P_{BST} an dem Vorderachsmodulator 529 redundant auszusteuern. Für den Fall, dass sowohl das elektropneumatische Steuermodul 1 aufgrund eines Fehlers stromlos ist und auch der Vorderachsmodulator 529 aufgrund des Fehlers oder eines anderen Fehlers stromlos ist, ist es möglich, auf diese Weise den manuell mittels des Fußpedals 600 ausgesteuerten Bremswertgeber-Steuerdruck P_{BST} über den Vorderachsmodulator 529 als Redundanzdruck P_{R} an dem Redundanzdruckanschluss 42 des elektropneumatischen Steuermoduls 1 auszusteuern.

Umgekehrt ist an das Vorderachs-Wechselventil 690 eine Steuerleitung 695 des elektropneumatischen Steuermoduls 1 angeschlossen, in die von dem elektropneumatischen Steuermodul 1 der Bremsdruck P_{B} des Anhängers 504 ausgesteuert wird. Die Steuerleitung 695 ist in Figur 8 so gezeigt, dass sie separat an einen Vorderachssteuerleitungsanschluss 696 des elektropneumatischen Steuermoduls 1 angeschlossen ist; in anderen Ausführungsformen kann sie auch von der pneumatischen Leitung 514 zum Anhängerwagen 504 abzweigen.

Das Vorderachs-Wechselventil 690 ist beispielsweise als Select-High-Ventil ausgebildet, sodass an dem Vorderachsmodulator 529 stets der höhere Druck des Bremsdrucks P_{B} und des Bremswertgeber-Steuerdruck P_{BST} ausgesteuert wird.

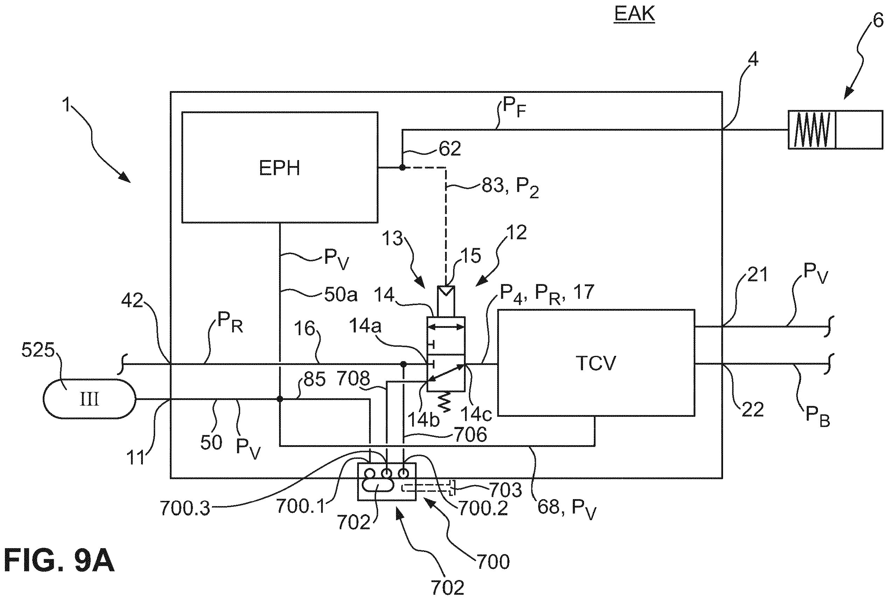

Die Figuren 9A bis 10 illustrieren nun zwei Ausführungsbeispiele des elektropneumatischen Steuermoduls 1, das eine Konfigurationseinheit 700 aufweist.

Die Konfigurationseinheit 700 dient dazu, neben der "europäischen Anhängersteuerung" auch eine "skandinavische Anhängersteuerung" zu erlauben. Die bisherigen Ausführungsbeispiele basierten auf einer "europäischen Anhängersteuerung", bei der bei im abgestellten Zustand des Fahrzeugzugs ein den entlüfteten Federspeichern entsprechender positiver Bremsdruck an dem Anhängerwagen ausgesteuert wird, um diesen zusätzlich zu bremsen. Bei der "skandinavischen Anhängersteuerung" ist das Gegenteil der Fall: Im abgestellten Zustand des Fahrzeugzugs sollen die Betriebsbremsen des Anhängerwagens gelöst sein. Die Konfigurationseinheit 700 erlaubt ein einfaches Konfigurieren zwischen einer europäischen Anhängerkonfiguration, in der eine europäische Anhängersteuerung möglich ist, und einer skandinavischen Anhängerkonfiguration, in der eine skandinavische Anhängersteuerung möglich ist.

Die in den Figuren 9A bis 10 gezeigten Ausführungsformen basieren grundsätzlich auf der Darstellung der Figur 3 und gleiche Elemente sind mit gleichen Bezugszeichen versehen. Insofern wird zunächst vollumfänglich auf die obige Beschreibung zu Figur 3 Bezug genommen. Im Folgenden werden insbesondere die Unterschiede zu Figur 3 hervorgehoben.

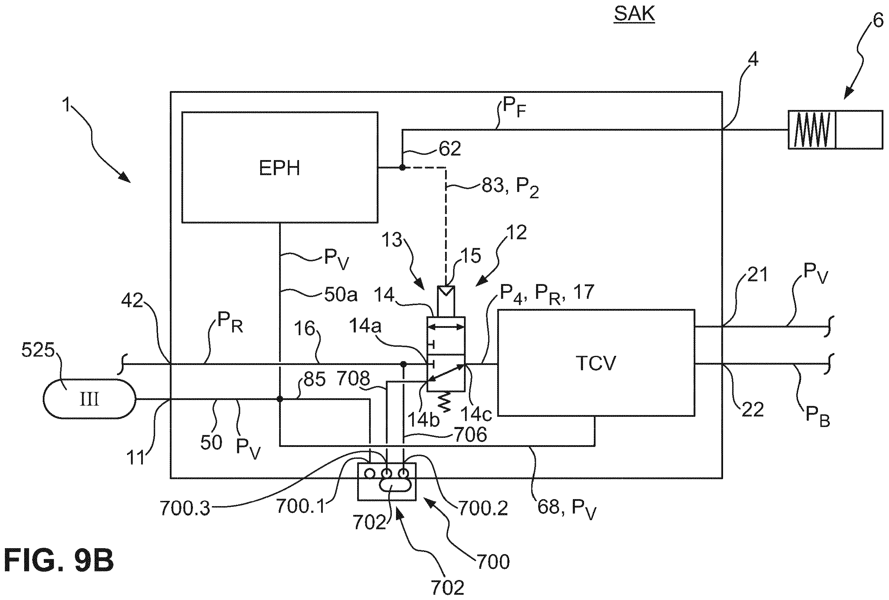

Die Figuren 9A, 9B zeigen zunächst ein erstes Ausführungsbeispiel, bei dem die Konfigurationseinheit 700 eine Druckverteilerplatte 702 aufweist. Die Konfigurationseinheit 700 hat einen ersten Konfigurationsanschluss 700.1, einen zweiten Konfigurationsanschluss 700.2 und einen dritten Konfigurationsanschluss 700.3. In dem in Figur 9A, 9B gezeigten Ausführungsbeispiel ist der erste Konfigurationsanschluss 700.1 mit der sechsten Vorratsdruckabzweigleitung 85 verbunden, die ihrerseits mit dem Vorratseingang 11 verbunden ist, sodass an dem ersten Konfigurationsanschluss 700.1 der Vorratsdruck P_{V} anliegt. Der zweite Konfigurationsanschluss 700.2 ist mit einer Redundanzabzweigleitung 706 verbunden, die von der ersten Redundanzdruckleitung 16 abzweigt. Die Redundanzabzweigleitung 706 muss nicht notwendigerweise von der ersten Redundanzdruckleitung 16 abzweigen, sie kann auch auf andere Weise mit dem Redundanzdruckanschluss 42 verbunden sein. An dem zweiten Konfigurationsanschluss 700.2 liegt folglich der Redundanzdruck P_{R} an, wenn dieser ausgesteuert wird. Der dritte Konfigurationsanschluss 700.3 schließlich ist über eine Konfigurationsleitung 708 mit dem zweiten Anschluss 14b des 3/2-Wegeventils 14 verbunden. Je nach Konfiguration der Konfigurationseinheit 700 wird in die Konfigurationsleitung 708 also der Vorratsdruck P_{V} oder der Redundanzdruck P_{R} ausgesteuert.

In der in Figur 9A gezeigten Variante ist die Druckverteilerplatte 702 in einer in Bezug auf die Figur 9A linken Position und verbindet den ersten Konfigurationsanschluss 700.1 mit dem dritten Konfigurationsanschluss 700.3. In dieser Konfiguration ist also der zweite Anschluss 14b des 3/2-Wegeventils 14 über die Konfigurationsleitung 708, die Konfigurationseinheit 700, die sechste Versorgungsdruckabzweigleitung 85 und die Vorratsverteilleitung 50 mit dem Vorratseingang 11 verbunden. Insofern entspricht die Konfiguration dem in Figur 3 gezeigten Layout. Ein funktionaler Unterschied im Aussteuern der einzelnen Drücke ergibt sich zwischen Figur 9A und Figur 3 nicht. Die Redundanzabzweigleitung 706 ist blind, da der zweite Konfigurationsanschluss 700.2 verschlossen ist.

Soll nun basierend auf der in Figur 9A gezeigten Ausführungsform die skandinavische Anhängerkonfiguration SAK erreicht werden (vgl. Fig. 9B), muss die Druckverteilerplatte 702 in die mit Bezug auf Figur 9A rechte Position gebracht werden. Dies ist in Figur 9B gezeigt. In Figur 9B ist die Druckverteilerplatte 702 so verschoben, dass der zweite Konfigurationsanschluss 700.2 mit dem dritten Konfigurationsanschluss 700.3 verbunden ist. Dies hat zur Folge, dass sowohl am ersten Anschluss 14a des 3/2-Wegeventils 14 als auch am zweiten Anschluss 14b des 3/2-Wegeventils 14 der Redundanzdruck P_{R} ausgesteuert wird, wenn dieser am Redundanzdruckanschluss 42 anliegt. In dieser Ausführungsform (Fig. 9B) ist die sechste Versorgungsdruckabzweigleitung 85 blind und der Vorratseingang 11 ist nur über die Vorratsverteilleitung 50 bzw. den Abschnitt 50a der Vorratsverteilleitung 50 der zur Feststellbremseinheit EPH führt mit der Feststellbremseinheit EPH verbunden, und über die dritte Versorgungsdruckabzweigleitung 68 mit der Anhängersteuereinheit TCV verbunden. Auch wenn das pneumatisch gesteuerte 3/2-Wegeventil 14 in dieser Ausführungsform (Fig. 9B) abhängig vom zweiten Steuerdruck P2 zwischen den ersten und zweiten Schaltstellungen hin- und herschaltet, wird dennoch in der zweiten Redundanzdruckleitung 17 stets nur der Redundanzdruck P_{R} ausgesteuert, und kein vierter Steuerdruck P4.

In gestrichelten Linien in Fig. 9A ist zudem als eine Variante eine Einstellschraube 703 gezeigt. Die Einstellschraube 703 kann dazu verwendet werden, die Druckverteilerplatte 702 zu positionieren. Sie kann auch selbst über Durchlässe oder Kanäle verfügen und

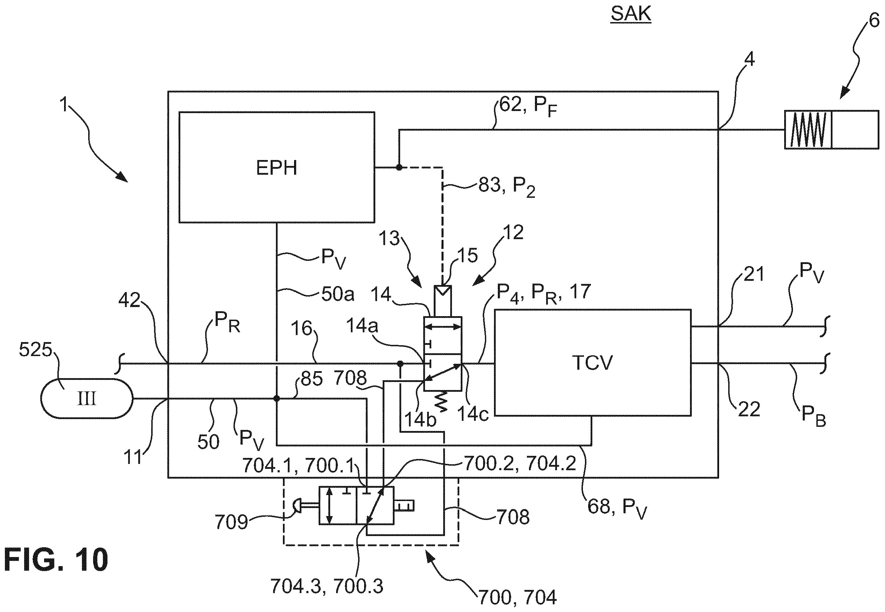

In dem zweiten Ausführungsbeispiel (Fig. 10) des elektropneumatischen Steuermoduls 1 mit Konfigurationseinheit 700, ist dieses als Schaltschieberventil 704 ausgebildet. Insofern wird der erste Konfigurationsanschluss 700.1 durch einen ersten Schieberventilanschluss 704.1, der zweite Konfigurationsanschluss 700.2 durch einen zweiten Schieberventilanschluss 704.2 und der dritte Konfigurationsanschluss 700.3 durch einen dritten Schieberventilanschluss 704.3 gebildet. Das Schaltschieberventil 704 hat einen Schalter 709, mit dem das Schaltschieberventil 704 zwischen einer ersten in Figur 10 nicht gezeigten Schaltstellung und einer zweiten in Figur 10 gezeigten Schaltstellung hin- und her schaltbar ist. Der Schalter 709 kann als Handgriff (Push-Pull Schalter) ausgebildet sein.

In der ersten in Figur 10 nicht gezeigten Schaltstellung ist der erste Schieberventilanschluss 704.1 mit dem dritten Schieberventilanschluss 704.3 verbunden, sodass der Vorratsdruck P_{V} an dem zweiten Anschluss 14b des 3/2-Wegeventils 14 ausgesteuert wird. In der zweiten in Figur 10 gezeigten Schaltstellung des Schaltschieberventils 704 ist der zweite Schieberventilanschluss 704.2 mit dem dritten Schaltschieberventilanschluss 704.3 verbunden, sodass der Redundanzdruck P_{R} an dem zweiten Anschluss 14b des 3/2-Wegeventils 14 ausgesteuert wird. Die erste in Figur 10 nicht gezeigte Schaltstellung bildet also die europäische Anhängerkonfiguration EAK ab und die zweite in Figur 10 gezeigte Schaltstellung des Schaltschieberventils 704 bildet die skandinavische Anhängerkonfiguration SAK ab.

In dieser Ausführungsform (Fig. 10) ist vorteilhaft, dass ein Bediener des Fahrzeugzugs selbsttätig das Schaltschieberventil 704 in die verschiedenen Schaltstellungen bringen kann und somit ein elektropneumatisches Steuermodul 1 geschaffen ist, das sowohl die europäische Norm als auch die skandinavische Norm erfüllen kann.

Durch eine entsprechende Überprüfung des am Anhängerbremsdruckanschluss 22 ausgesteuerten Drucks mittels des Bremsdrucksensors 76, wie oben beschrieben, kann auch die Schaltstellung des Schaltschieberventils 704 auf Plausibilität überprüft werden.

### Bezugszeichenliste (Bestandteil der Beschreibung)

- A: Achse
- EAK: europäische Anhängerkonfiguration
- ECU: elektronische Steuereinheit
- EPH: Feststellbremseinheit
- IV: Einlassventil
- OV: Auslassventil
- P₀: Umgebungsdruck
- P₁: erster Steuerdruck
- P₂: zweiter Steuerdruck
- P₃: dritter Steuerdruck
- P₄: vierter Steuerdruck
- P_{B}: Bremsdruck
- P_{BA}: Bremsdruck (Stand der Technik)
- P_{BV}: Vorderachs-Bremsdruck
- P_{BST}: Bremswertgeber-Steuerdruck
- P_{F}: Federspeicher-Arbeitsdruck
- P_{R}: Redundanzdruck
- P_{V}: Vorratsdruck
- RV: Redundanzventil
- S₁: erstes Signal (Feststellbrems-Signal)
- S₂: zweites Signal
- S₃: drittes Signal
- S₄: viertes Signal
- S_{DA}: Drucksignal von Sensor 76
- S_{H1}: erstes Hilfsbremssignal
- S_{H2}: zweites Hilfsbremssignal
- S_{R}: redundantes elektronisches Bremssignal
- S_{PR}: Redundanzdrucksignal von Sensor 90
- SAK: skandinavische Anhängerkonfiguration
- TCV: Anhängersteuereinheit
- 1: elektropneumatisches Steuermodul
- 2: Gehäuse
- 3: Drucksenke
- 4: Federspeicheranschluss
- 6: Federspeicher
- 6a: Zylinder d. Federspeichers
- 8: Feststellbrems-Ventileinheit
- 10: bistabiles Ventil
- 10a: erster Bistabilventil-Anschluss
- 10b: zweiter Bistabilventil-Anschluss
- 10c: dritter Bistabilventil-Anschluss
- 11: Vorratseingang
- 12: Parkbremsventileinheit
- 13: pneumatisch gesteuertes Schaltventil
- 14: pneumatisch gesteuertes 3/2-Wegeventil
- 14a: erster Anschluss d. 3/2-Wegeventils
- 14b: zweiter Anschluss d. 3/2-Wegeventils
- 14c: dritter Anschluss d. 3/2-Wegeventil
- 15: pneumatischer Steuereingang d. 3/2-Wegeventil
- 16: erste Redundanzdruckleitung
- 17: zweite Redundanzdruckleitung
- 18: Wechselventil
- 18a: erster Eingang d. Wechselventils
- 18b: zweiter Eingang d. Wechselventil
- 18c: Auslass d. Wechselventil
- 19: doppelt wirkendes Rückschlagventil
- 20: zweites Relaisventil
- 21: Anhängerversorgungsdruckanschluss
- 22: Anhängerbremsdruckanschluss
- 23: Eingang d. zweiten Relaisventils
- 24: Ausgang d. zweiten Relaisventils
- 25: Steuereingang d. zweiten Relaisventils
- 26: Entlüftungsausgang d. zweiten Relaisventils
- 42: Redundanzdruckanschluss
- 50: Vorratsverteilleitung
- 50a: Abschnitt der Vorratsverteilleitung zur EPH
- 51: Entlüftungsverteilleitung
- 52: erste Vorratsabzweigleitung
- 53: erste Entlüftungsabzweigleitung
- 54: erste Steuerleitung
- 55: Hilfsbremsventil
- 56a: erster Hilfsbremsventilanschluss
- 56b: zweiter Hilfsbremsventilanschluss
- 57: zweite Steuerleitung
- 58: erstes Relaisventil
- 59a: Steuereingang d. ersten Relaisventils
- 59b: Vorratsanschluss d. ersten Relaisventils
- 59c: Ausgang d. ersten Relaisventils
- 60: zweite Vorratsabzweigleitung
- 62: Federspeicherleitung
- 63: erste Druckmessleitung
- 64: Drucksensor
- 65: Anhängersteuer-Ventileinheit
- 66: Einlass-Auslass-Ventileinheit
- 67a: erster Einlassventil-Anschluss
- 67b: zweiter Einlassventil-Anschluss
- 68: dritte Vorratsdruckabzweigleitung
- 69: dritte Steuerleitung
- 70: zweite Entlüftungsabzweigleitung
- 71: vierte Vorratsdruckabzweigleitung
- 72a: erster Anschluss d. Anhängerabrissventils
- 72b: zweiter Anschluss d. Anhängerabrissventils
- 73: Anhängerabrissventil
- 74: fünfte Vorratsdruckabzweigleitung
- 75: Anhängerbremsdruckleitung
- 76: Bremsdrucksensor
- 77: Bremsdruckmessleitung
- 78a: erster Auslassventilanschluss
- 78b: zweiter Auslassventilanschluss
- 79: dritte Entlüftungsabzweigleitung
- 80a: erster Redundanzventilanschluss
- 80b: zweiter Redundanzventilanschluss
- 81: Redundanzdrucksteuerleitung
- 83: pneumatische Steuerleitung
- 84: vierte Entlüftungsabzweigleitung
- 85: sechste Versorgungsdruckabzweigleitung
- 90: redundanter Drucksensor
- 91: Redundanzdruckmessleitung
- 100: Steuerkammer
- 102: Steuerkolben
- 104: Ventilsitz
- 106: Schiebering
- 108: Spiralfeder
- 110: zweiter Ventilsitz
- 112: Vorsprung
- 114: Arbeitsraum
- 130: Geräuschdämpfer
- 500: Fahrzeugzug
- 502: Zugwagen
- 504: Anhängerwagen
- 503: Vorderachse
- 506: Achse des Anhängerwagens
- 507a, 507b, 507c, 507d: Räder
- 508: Anhänger-Betriebsbremssystem
- 510a, 510b: zwei Betriebsbremsen des Anhängerwagens
- 511, 512: Anschlüsse
- 513, 514: pneumatische Leitungen
- 515, 516: Anschlüsse
- 520: elektronisch steuerbares pneumatisches Bremssystem
- 521: erster Vorrat
- 522: Hinterachsbremskreislauf
- 523: zweiter Vorrat
- 524: Vorderachsbremskreislauf
- 525: dritter Drukluft-Vorrat
- 526: pneumatische Vorratszufuhrleitung
- 527: Zentralmodul
- 528: Bremswertgeber
- 529: Vorderachsmodulator
- 530a, 530b: zwei vorderen Betriebsbremsen
- 531: Hinterachsmodulator
- 532a, 532b: zwei (Tristop-)Betriebsbremsen
- 533: Anhängerbremskreislauf
- 534: Handbremsschalter (HCU)
- 535a, 535b: ABS-Module
- 536: Steuereinheit für autonomes Fahren
- 537: Energiequelle
- 538: SAE-Einheit (BUS-System)
- 539: Lenkwinkel-Sensoren
- 540a, 540b, 540c, 540d: Sensoren für Bremsbelagverschleißsensierung
- 541a, 541b, 541c, 541d: Sensoren für eine Drehzahl der Räder
- 550: Signalleitung
- 552: Redundanzdruckzufuhrleitung
- 554: erster CAN-Bus (direkt)
- 556: zweiter CAN-Bus (indirekt)
- 557: Spannungsversorgung
- 558: Spannungsversorgung HCU
- 560a, 560b: pneumatische Leitungen
- 561: erster Busanschluss
- 562: zweiter Busanschluss
- 590: elektronisches Bremspedal
- 591: Anschluss
- 600: Fußpedal
- 602: elektrischer Weggeber
- 604: elektrische Leitung
- 605: pneumatischer Ausgang
- 606: pneumatische Leitung
- 607: separates Gehäuse
- 608: elektronische Steuereinheit
- 609: Feststellbremsventileinheit
- 610: Vorratseingang
- 611: Vorratsleitung
- 612: elektrischer Anschluss
- 613: Signalleitung
- 614: Bistabilventil
- 615a: erster Anschluss d. Bistabilventils
- 615b: zweiter Anschluss d. Bistabilventil
- 615c: dritter Anschluss d. Bistabilventil
- 616: 2/2-Wegeventil
- 617a: erster Anschluss d. 2/2-Wegeventil
- 617b: zweiter Anschluss d. 2/2-Wegeventil
- 618: 3/2-Wegeventil
- 619a: erster Anschluss d. 3/2-Wegeventil
- 619b: zweiter Anschluss d. 3/2-Wegeventil
- 619c: dritter Anschluss d. 3/2-Wegeventil
- 620: pneumatische Leitung
- 621: pneumatische Leitung
- 622: pneumatische Leitung
- 636: Relaisventil EPH
- 637a: Steuereingang d. zweiten Relaisventils
- 637b: Vorratsanschluss d. zweiten Relaisventils
- 637c: Arbeitsausgang d. zweiten Relaisventils
- 638: pneumatische Leitung
- 640: Federspeicherleitung
- 641: Federspeicher-Anschluss
- 642: Federspeicher
- 642a: Zylinder d. Federspeichers
- 650: Gehäuse TCV
- 651: Einlass-Auslass-Ventileinheit
- 652: inverses Relaisventil
- 654: Anhängerabrissventil
- 655: Anschluss
- 657: elektronischer Anschluss
- 658: Signalleitung
- 660: Einlassventil
- 661a: erster Anschluss d. Einlassventils
- 661b: zweiter Anschluss d. Einlassventils
- 662: Auslassventil
- 664: Redundanzventil
- 665a: erster Anschluss d. Redundanzventil
- 670: erste Steuerkammer d. inversen Relaisventils
- 671: Anhängerbremsdruckanschluss
- 672: Anhängerversorgungsdruckanschluss
- 674: Parkbremsdruckleitung
- 675: Anschluss
- 676: Anschluss
- 677: pneumatische Leitung
- 678: pneumatische Vorratsleitung
- 679: Abzweigleitung
- 680: zweite Steuerkammer
- 681: inverser Relaiskolben
- 682: dritte Steuerkammer
- 683: Relaiskolben
- 690: Vorderachs-Wechselventil
- 692: T-Stück
- 693: Vorderachs-Bremsdruckleitung
- 694: zweite Redundanzdruckzufuhrleitung
- 695: Steuerleitung
- 696: Vorderachssteuerleitungsanschluss
- 700: Konfigurationseinheit
- 700.1: erster Konfigurationsanschluss
- 700.2: zweiter Konfigurationsanschluss
- 700.3: dritter Konfigurationsanschluss
- 702: Druckverteilerplatte
- 703: Einstellschraube
- 704: Schaltschieberventil
- 704.1: erster Schieberventilanschluss
- 704.2: zweiter Schieberventilanschluss
- 704.3: dritter Schieberventilanschluss
- 706: Redundanzabzweigleitung
- 708: Konfigurationsleitung
- 709: Schalter

## Patentansprüche

1. Elektropneumatisches Steuermodul (1) für ein elektronisch steuerbares pneumatisches Bremssystem (520) für einen Fahrzeugzug (500) mit einem Zugwagen (502) und einem Anhängerwagen (504), mit:
einem pneumatischen Vorratseingang (11), der mit einem Druckluftvorrat (525) verbindbar ist,
einer Anhängersteuereinheit (TCV), die eine Anhängersteuer-Ventileinheit (65) mit einem oder mehreren elektropneumatischen Ventilen (RV, IV, OV), einen Anhängerbremsdruckanschluss (22) und einen Anhängerversorgungsdruckanschluss (21) aufweist,
einer Feststellbremseinheit (EPH), die einen Federspeicher-Anschluss (4) für mindestens einen Federspeicher (6) für einen Zugwagen und eine Feststellbrems-Ventileinheit (8) mit einem oder mehreren elektropneumatischen Ventilen (10, 55), aufweist, und
einer elektronischen Steuereinheit (ECU),
wobei die elektronische Steuereinheit (ECU) dazu eingerichtet ist die Feststellbrems-Ventileinheit (8) basierend auf einem elektronischen Feststellsignal (S1) zu veranlassen wenigstens ein Ventil (10) der Feststellbrems-Ventileinheit (8) so zu schalten, dass der Federspeicher-Anschluss (4) zum Entlüften des Federspeichers (6) mit einer Drucksenke (3) verbunden wird,
**gekennzeichnet durch** eine Parkbremsventileinheit (12), mit einem pneumatisch gesteuerten Schaltventil (13), welches einen pneumatischen Steuereingang (15) zum Aufnehmen eines pneumatischen Steuerdrucks (P₂) aufweist, wobei das pneumatisch gesteuerte Schaltventil (13) bei Verbinden des Federspeicher-Anschlusses (4) mit der Drucksenke (3) so geschaltet wird, dass ein Bremsdruck (P_{B}) an dem Anhängerbremsdruckanschluss (22) aussteuerbar ist.

2. Elektropneumatisches Steuermodul nach Anspruch 1, wobei der pneumatische Steuerdruck (P₂) der Druck an dem Federspeicher-Anschluss (4) ist.

3. Elektropneumatisches Steuermodul nach Anspruch 1, wobei der pneumatische Steuerdruck (P₂) ein Feststellbrems-Steuerdruck in einer vorgeschalteten Vorsteuereinheit der Feststellbremseinheit (EPH) ist.

4. Elektropneumatisches Steuermodul nach einem der vorstehenden Ansprüche, aufweisend
einen Redundanzdruckanschluss (42) mit einer ersten Redundanzdruckleitung (16) zum Anschluss eines Bremswertgebers (528) oder des Brems- oder Steuerdrucks einer der anderen Fahrzeugachsen (503), über den der Bremsdruck (P_{B}) an dem Anhängerbremsdruckanschluss (22) aussteuerbar ist.

5. Elektropneumatisches Steuermodul nach Anspruch 4, wobei ein Bremsdruck (P_{BV}) einer Betriebsbremse (530a, 530b) an dem Redundanzdruckanschluss (42) aussteuerbar ist.

6. Elektropneumatisches Steuermodul nach Anspruch 4, wobei das pneumatisch gesteuerte Schaltventil (13) mit einem Anschluss (14c) mit einer zweiten Redundanzdruckleitung (17) verbunden ist, mit welcher auch die erste Redundanzdruckleitung (16) verbindbar ist, sodass bei Schalten des pneumatisch gesteuerten Schaltventils (13) ein Druck (P₄) in die zweite Redundanzdruckleitung (17) aussteuerbar ist.

7. Elektropneumatisches Steuermodul nach Anspruch 6, wobei das pneumatisch gesteuerte Schaltventil (13) als 3/2-Wegeventil (14) mit einem ersten, einem zweiten und einem dritten Anschluss (14a, 14b, 14c) ausgebildet ist.

8. Elektropneumatisches Steuermodul nach Anspruch 7, wobei der erste Anschluss (14a) des pneumatisch gesteuerten 3/2-Wegeventils mit dem Redundanzdruckanschluss (42) und der zweite Anschluss (14b) des pneumatisch gesteuerten 3/2-Wegeventils mit dem Vorratseingang (11) verbunden ist.

9. Elektropneumatisches Steuermodul nach Anspruch 7, wobei der erster Anschluss (14a) des pneumatisch gesteuerten 3/2-Wegeventils (14) mit einer Drucksenke (3) verbunden ist.

10. Elektropneumatisches Steuermodul nach einem der vorstehenden Ansprüche 7 bis 9, wobei der dritte Anschluss (14c) des pneumatisch gesteuerten 3/2-Wegeventils (14) mit einem ersten Eingang (18a) eines Wechselventils (18) verbunden ist, ein zweiter Eingang (18b) des Wechselventils (18) mit dem Redundanzdruckanschluss (42) verbunden ist, und ein Ausgang (18c) des Wechselventils (18) mit der zweiten Redundanzdruckleitung (17) verbunden ist.

11. Elektropneumatisches Steuermodul nach Anspruch 10, wobei das Wechselventil (18) als ein Rückschlagventil (19) mit zwei Eingängen (18a, 18b), insbesondere als ein Select-High-Ventil, ausgebildet ist.

12. Elektropneumatisches Steuermodul nach einem der vorstehenden Ansprüche, wobei zwischen einem, insbesondere dritten, Anschluss (14c) des pneumatisch gesteuerten Schaltventils (14) und dem Anhängerbremsdruckanschluss (22) ein elektronisches Schaltventil (RV), vorzugsweise in Form eines 3/2-Wegeventils oder eines 2/2-Wegeventils, angeordnet ist, welches besonders bevorzugt in einer stromlosen Stellung offen ist, sodass auch bei Verbinden des Federspeicher-Anschlusses (4) mit der Drucksenke (3) ein Aussteuern eines Bremsdrucks (P_{B}) an dem Anhängerbremsdruckanschluss (22) unterbunden werden kann.

13. Elektropneumatisches Steuermodul nach einem der vorstehenden Ansprüche, wobei die Anhängersteuereinheit (TCV) ein Relaisventil (20) aufweist, welches
einen mit dem Vorratseingang (11) verbundenen Eingang (23),
einen mit dem Anhängerbremsdruckanschluss (22) verbundenen Ausgang (24),
einen Entlüftungsausgang (26), über den der Ausgang (24) mit einer Drucksenke (3) verbindbar ist, und
einen Steuereingang (25) aufweist, der in eine gemeinsame Steuerkammer (100) mündet,
wobei der Steuereingang (25) über die Anhängersteuer-Ventileinheit (65) mit dem Vorratseingang (11) und/oder einer Drucksenke (3) verbindbar ist, um einen Bremsdruck (P_{B}) am Anhängerbremsdruckanschluss (22) auszusteuern.

14. Elektropneumatisches Steuermodul nach Anspruch 13, wobei die Steuerkammer (100) des Relaisventils (20) durch einen einzigen Steuer-Kolben (102) begrenzt ist.

15. Elektropneumatisches Steuermodul nach Anspruch 13 oder 14, wobei die Steuerkammer (100) über ein elektronisch schaltbares Einlassventil (IV) mit dem Vorratseingang (11) verbindbar ist.

16. Elektropneumatisches Steuermodul nach den Ansprüchen 4 und 13, wobei die Steuerkammer (100) mit der ersten Redundanzdruckleitung (16) verbindbar ist.

17. Elektropneumatisches Steuermodul nach einem der vorstehenden Ansprüche, wobei die elektronische Steuereinheit (ECU) dazu eingerichtet ist
- die Feststellbrems-Ventileinheit (8) basierend auf einem ersten elektronischen Hilfsbremssignal (S_{H1}) zu veranlassen wenigstens ein Ventil (10) der Feststellbrems-Ventileinheit (8) so zu schalten, dass an dem Federspeicher-Anschluss (4) ein Arbeitsdruck (P₂) zum temporären und gestuften Entlüften des Federspeichers (6) ausgesteuert wird; und
- die Anhängersteuer-Ventileinheit (65) basierend auf dem ersten elektronischen Hilfsbremssignal (S_{H1}) oder einem zweiten Hilfsbremssignal (S_{H2}) zu veranlassen wenigstens ein Ventil (IV) der Anhängersteuer-Ventileinheit (65) so zu schalten, dass an dem Anhängerbremsdruckanschluss (22) ein Bremsdruck (P_{B}) ausgesteuert wird.

18. Elektropneumatisches Steuermodul nach einem der vorstehenden Ansprüche, wobei die elektronische Steuereinheit (ECU), die Anhängersteuereinheit (TCV) und die Feststellbremseinheit (EPH) in einem Modul integriert sind.

19. Elektropneumatisches Steuermodul nach einem der vorstehenden Ansprüche, mit einem gemeinsamen Gehäuse (2), in dem mindestens die Komponenten der elektronischen Steuereinheit (ECU), der Anhängersteuereinheit (TCV) und der Feststellbremseinheit (EPH) angeordnet sind.

20. Elektropneumatisches Steuermodul nach einem der vorstehenden Ansprüche, wobei kein inverses Relaisventil vorgesehen ist.

21. Elektropneumatisches Steuermodul nach einem der vorstehenden Ansprüche, mit einem redundanten Drucksensor (90), der an der ersten Redundanzdruckleitung (16) oder dem Redundanzdruckanschluss (42) angeordnet ist und dazu ausgebildet ist, den pneumatischen Redundanzdruck (P_{R}) an dem Redundanzdruckanschluss (42) zu erfassen und ein entsprechendes Redundanzdruck-Signal (S_{PR}) als ein redundantes elektronisches Betriebs-Bremssignal (S_{R}) an der Steuereinheit (ECU) bereitzustellen, wobei die Steuereinheit (ECU) dazu eingerichtet ist, in Abhängigkeit des empfangenen redundanten elektronischen Betriebs-Bremssignals (S_{R}) wenigstens ein Ventil (RV) der Anhängersteuer-Ventileinheit (65) so zu schalten, dass ein entsprechender Bremsdruck (P_{B}) an dem Anhängerbremsdruckanschluss (22) ausgesteuert wird.

22. Elektropneumatisches Steuermodul nach Anspruch 8, aufweisend eine Konfigurationseinheit (700), mit der das elektropneumatische Steuermodul (1) zwischen einer europäischen Anhängerkonfiguration (EAK) und einer skandinavischen Anhängerkonfiguration (SAK) konfigurierbar ist.

23. Elektropneumatisches Steuermodul nach Anspruch 22, wobei die Konfigurationseinheit (700) eine Druckverteilerplatte (702), ein Schaltschieberventil (704) oder eine Einstellschraube (703) aufweist.

24. Elektropneumatisches Steuermodul nach Anspruch 22 oder 23, wobei die Konfigurationseinheit (700) einen mit dem Vorratseingang (11) verbundenen ersten Konfigurationsanschluss (700.1), einen mit dem Redundanzdruckanschluss (42) verbundenen zweiten Konfigurationsanschluss (700.2), und einen mit dem zweiten Anschluss (14b) des pneumatisch gesteuerten 3/2-Wegeventils (14) verbundenen dritten Konfigurationsanschluss (700.3) aufweist.

25. Elektropneumatisches Steuermodul nach Anspruch 24, wobei in der:
- europäischen Anhängerkonfiguration (EAK) der erste Konfigurationsanschluss (700.1) mit dem dritten Konfigurationsanschluss (700.3) verbunden ist; und in der
- skandinavischen Anhängerkonfiguration (SAK) der zweite Konfigurationsanschluss (700.2) mit dem dritten Konfigurationsanschluss (700.3) verbunden ist.

26. Zugwagen (502) mit einem elektropneumatischen Steuermodul (1) nach einem der vorherigen Ansprüche 1 bis 25.

## Claims

1. Electro-pneumatic control module (1) for an electronically controllable pneumatic brake system (520) for a vehicle combination (500) comprising a tractor vehicle (502) and a trailer vehicle (504), comprising:
a pneumatic supply inlet (11) which can be connected to a compressed-air supply (525),
a trailer control unit (TCV) which has a trailer control valve unit (65) having one or more electro-pneumatic valves (RV, IV, OV), and which has a trailer brake pressure connection (22) and a trailer supply pressure connection (21),
a locking brake unit (EPH) which has a spring accumulator connection (4) for at least one spring accumulator (6) for a tractor vehicle, and a locking brake valve unit (8) having one or more electro-pneumatic valves (10, 55), and
an electronic control unit (ECU),
wherein the electronic control unit (ECU) is configured to cause the locking brake valve unit (8), on the basis of an electronic locking signal (S1), to switch at least one valve (10) of the locking brake valve unit (8) in such a way that the spring accumulator connection (4) is connected to a pressure sink (3) in order to vent the spring accumulator (6),
**characterized by** a parking brake valve unit (12) having a pneumatically controlled switching valve (13) that has a pneumatic control input (15) for receiving a pneumatic control pressure (P₂), wherein, when the spring accumulator connection (4) is connected to the pressure sink (3), the pneumatically controlled switching valve (13) is switched in such a way that a brake pressure (P_{B}) can be controlled at the trailer brake pressure connection (22).

2. Electro-pneumatic control module according to claim 1, wherein the pneumatic control pressure (P₂) is the pressure at the spring accumulator connection (4).

3. Electro-pneumatic control module according to claim 1, wherein the pneumatic control pressure (P₂) is a locking brake control pressure in an upstream pilot control unit of the locking brake unit (EPH).

4. Electro-pneumatic control module according to any of the preceding claims, comprising
a redundancy pressure connection (42) having a first redundancy pressure line (16) for connecting a brake value transmitter (528) or the brake or control pressure of one of the other vehicle axles (503), via which the brake pressure (P_{B}) can be controlled at the trailer brake pressure connection (22).

5. Electro-pneumatic control module according to claim 4, wherein a brake pressure (P_{BV}) of a service brake (530a, 530b) can be controlled at the redundancy pressure connection (42).

6. Electro-pneumatic control module according to claim 4, wherein the pneumatically controlled switching valve (13) is connected by a connection (14c) to a second redundancy pressure line (17), to which the first redundancy pressure line (16) can also be connected, such that, when the pneumatically controlled switching valve (13) is switched, a pressure (P₄) can be controlled into the second redundancy pressure line (17).

7. Electro-pneumatic control module according to claim 6, wherein the pneumatically controlled switching valve (13) is designed as a 3/2 directional valve (14) having a first, a second and a third connection (14a, 14b, 14c).

8. Electro-pneumatic control module according to claim 7, wherein the first connection (14a) of the pneumatically controlled 3/2 directional valve is connected to the redundancy pressure connection (42) and the second connection (14b) of the pneumatically controlled 3/2 directional valve is connected to the supply inlet (11).

9. Electro-pneumatic control module according to claim 7, wherein the first connection (14a) of the pneumatically controlled 3/2 directional valve (14) is connected to a pressure sink (3).

10. Electro-pneumatic control module according to any of the preceding claims 7 to 9, wherein the third connection (14c) of the pneumatically controlled 3/2 directional valve (14) is connected to a first inlet (18a) of a shuttle valve (18), a second inlet (18b) of the shuttle valve (18) is connected to the redundancy pressure connection (42), and an outlet (18c) of the shuttle valve (18) is connected to the second redundancy pressure line (17).

11. Electro-pneumatic control module according to claim 10, wherein the shuttle valve (18) is designed as a check valve (19) having two inlets (18a, 18b), in particular as a select-high valve.

12. Electro-pneumatic control module according to any of the preceding claims, wherein an electronic switching valve (RV), preferably in the form of a 3/2 directional valve or a 2/2 directional valve, is arranged between an in particular third connection (14c) of the pneumatically controlled switching valve (14) and the trailer brake pressure connection (22), and is particularly preferably open in a deenergized position so that, even when the spring accumulator connection (4) is connected to the pressure sink (3), control of a brake pressure (P_{B}) can be prevented at the trailer brake pressure connection (22).

13. Electro-pneumatic control module according to any of the preceding claims, wherein the trailer control unit (TCV) has a relay valve (20), which comprises
an inlet (23) connected to the supply inlet (11),
an outlet (24) connected to the trailer brake pressure connection (22),
a venting outlet (26) via which the outlet (24) can be connected to a pressure sink (3), and
a control input (25) which opens into a common control chamber (100),
wherein the control input (25) can be connected to the supply inlet (11) and/or a pressure sink (3) via the trailer control valve unit (65) in order to control a brake pressure (P_{B}) at the trailer brake pressure connection (22).

14. Electro-pneumatic control module according to claim 13, wherein the control chamber (100) of the relay valve (20) is delimited by a single control piston (102).

15. Electro-pneumatic control module according to claim 13 or 14, wherein the control chamber (100) can be connected to the supply inlet (11) via an electronically switchable inlet valve (IV).

16. Electro-pneumatic control module according to claims 4 and 13, wherein the control chamber (100) can be connected to the first redundancy pressure line (16).

17. Electro-pneumatic control module according to any of the preceding claims, wherein the electronic control unit (ECU) is configured to
- cause the locking brake valve unit (8), on the basis of a first electronic auxiliary brake signal (S_{H1}), TO switch at least one valve (10) of the locking brake valve unit (8) in such a way that a working pressure (P₂) is controlled at the spring accumulator connection (4) for temporary and staged venting of the spring accumulator (6); and
- cause the trailer control valve unit (65), on the basis of the first electronic auxiliary brake signal (S_{H1}) or a second auxiliary brake signal (S_{H2}), TO switch at least one valve (IV) of the trailer control valve unit (65) in such a way that a brake pressure (P_{B}) is controlled at the trailer brake pressure connection (22).

18. Electro-pneumatic control module according to any of the preceding claims, wherein the electronic control unit (ECU), the trailer control unit (TCV) and the locking brake unit (EPH) are integrated in one module.

19. Electro-pneumatic control module according to any of the preceding claims, comprising a common housing (2) in which at least the components of the electronic control unit (ECU), the trailer control unit (TCV) and the locking brake unit (EPH) are arranged.

20. Electro-pneumatic control module according to any of the preceding claims, wherein no inverse relay valve is provided.

21. Electro-pneumatic control module according to any of the preceding claims, comprising a redundant pressure sensor (90) which is arranged on the first redundancy pressure line (16) or the redundancy pressure connection (42) and is designed to detect the pneumatic redundancy pressure (P_{R}) at the redundancy pressure connection (42) and to provide a corresponding redundancy pressure signal (S_{PR}) as a redundant electronic service brake signal (S_{R}) to the control unit (ECU), wherein the control unit (ECU) is configured, on the basis of the received redundant electronic service brake signal (S_{R}), to switch at least one valve (RV) of the trailer control valve unit (65) in such a way that a corresponding brake pressure (P_{B}) is controlled at the trailer brake pressure connection (22).

22. Electro-pneumatic control module according to claim 8, comprising a configuration unit (700) by means of which the electro-pneumatic control module (1) can be configured between a European trailer configuration (EAK) and a Scandinavian trailer configuration (SAK).

23. Electro-pneumatic control module according to claim 22, wherein the configuration unit (700) comprises a pressure distributor plate (702), a slide switch valve (704), or an adjustment screw (703).

24. Electro-pneumatic control module according to claim 22 or 23, wherein the configuration unit (700) has a first configuration connection (700.1) connected to the supply inlet (11), a second configuration connection (700.2) connected to the redundancy pressure connection (42), and a third configuration connection (700.3) connected to the second connection (14b) of the pneumatically controlled 3/2 directional valve (14).

25. Electro-pneumatic control module according to claim 24, wherein:
- in the European trailer configuration (EAK), the first configuration connection (700.1) is connected to the third configuration connection (700.3); and
- in the Scandinavian trailer configuration (SAK), the second configuration connection (700.2) is connected to the third configuration connection (700.3).

26. Vehicle combination (502) comprising an electro-pneumatic control module (1) according to any of the preceding claims 1 to 25.

## Revendications

1. Module de commande électropneumatique (1) pour un système de freinage pneumatique (520) pouvant être commandé électroniquement destiné à un train de véhicules (500) comportant un véhicule tracteur (502) et un véhicule de type remorque (504), comportant :
une entrée de réserve pneumatique (11) qui peut être reliée à un réservoir d'air comprimé (525),
une unité de commande de remorque (TCV) qui présente une unité de soupapes de commande de remorque (65) comportant une ou plusieurs soupapes électropneumatiques (RV, IV, OV), un raccord de pression de freinage de remorque (22) et un raccord de pression d'alimentation de remorque (21),
une unité de frein de stationnement (EPH) qui présente un raccord d'accumulateur à ressort (4) pour au moins un accumulateur à ressort (6) pour un véhicule tracteur et une unité de soupapes de frein de stationnement (8) comportant une ou plusieurs soupapes électropneumatiques (10, 55), et
une unité de commande électronique (ECU),
dans lequel l'unité de commande électronique (ECU) est conçue pour amener l'unité de soupapes de frein de stationnement (8) à commuter, sur la base d'un signal de stationnement électronique (S1), au moins une soupape (10) de l'unité de soupapes de frein de stationnement (8), de sorte que le raccord d'accumulateur à ressort (4) permettant de désaérer l'accumulateur à ressort (6) est relié à un puits de pression (3),
**caractérisé par** une unité de soupapes de frein à main (12), comportant une soupape de commutation (13) à commande pneumatique qui présente une entrée de commande (15) pneumatique permettant de recevoir une pression de commande (P₂) pneumatique, dans lequel la soupape de commutation (13) à commande pneumatique est commutée lors de la liaison du raccord d'accumulateur à ressort (4) au puits de pression (3), de sorte qu'une pression de freinage (P_{B}) peut être commandée au niveau du raccord de pression de freinage de remorque (22).

2. Module de commande électropneumatique selon la revendication 1, dans lequel la pression de commande (P₂) pneumatique est la pression au niveau du raccord d'accumulateur à ressort (4).

3. Module de commande électropneumatique selon la revendication 1, dans lequel la pression de commande (P₂) pneumatique est une pression de commande de frein de stationnement dans une unité de commande pilote, montée en amont, de l'unité de frein de stationnement (EPH).

4. Module de commande électropneumatique selon l'une des revendications précédentes, présentant
un raccord de pression de redondance (42) comportant une première conduite de pression de redondance (16) pour le raccordement d'un générateur de valeur de freinage (528) ou de la pression de freinage ou de commande de l'un des autres essieux de véhicule (503), par l'intermédiaire duquel raccord la pression de freinage (P_{B}) peut être commandée au niveau du raccord de pression de freinage de remorque (22).

5. Module de commande électropneumatique selon la revendication 4, dans lequel une pression de freinage (P_{BV}) d'un frein de service (530a, 530b) peut être commandée au niveau du raccord de pression de redondance (42).

6. Module de commande électropneumatique selon la revendication 4, dans lequel la soupape de commutation (13) à commande pneumatique est reliée avec un raccord (14c) à une seconde conduite de pression de redondance (17) à laquelle la première conduite de pression de redondance (16) peut également être reliée, de sorte que, lors de la commutation de la soupape de commutation (13) à commande pneumatique, une pression (P₄) dans la seconde conduite de pression de redondance (17) peut être commandée.

7. Module de commande électropneumatique selon la revendication 6, dans lequel la soupape de commutation (13) à commande pneumatique est réalisée sous la forme d'une soupape à 3/2 voies (14) comportant un premier, un deuxième et un troisième raccord (14a, 14b, 14c).

8. Module de commande électropneumatique selon la revendication 7, dans lequel le premier raccord (14a) de la soupape à 3/2 voies à commande pneumatique est relié au raccord de pression de redondance (42) et le deuxième raccord (14b) de la soupape à 3/2 voies à commande pneumatique est relié à l'entrée de réserve (11).

9. Module de commande électropneumatique selon la revendication 7, dans lequel le premier raccord (14a) de la soupape à 3/2 voies (14) à commande pneumatique est relié à un puits de pression (3).

10. Module de commande électropneumatique selon l'une des revendications 7 à 9 précédentes, dans lequel le troisième raccord (14c) de la soupape à 3/2 voies (14) à commande pneumatique est relié à une première entrée (18a) d'une soupape d'inversion (18), une seconde entrée (18b) de la soupape d'inversion (18) est reliée au raccord de pression de redondance (42), et une sortie (18c) de la soupape d'inversion (18) est reliée à la seconde conduite de pression de redondance (17).

11. Module de commande électropneumatique selon la revendication 10, dans lequel la soupape d'inversion (18) est réalisée sous la forme d'une soupape anti-retour (19) comportant deux entrées (18a, 18b), en particulier sous la forme d'une soupape de sélection haute.

12. Module de commande électropneumatique selon l'une des revendications précédentes, dans lequel, entre un raccord (14c), en particulier le troisième, de la soupape de commutation (14) à commande pneumatique et le raccord de pression de freinage de remorque (22) est disposée une soupape de commutation (RV) électronique, de préférence sous la forme d'une soupape à 3/2 voies ou d'une soupape à 2/2 voies, laquelle est de manière particulièrement préférée ouverte dans une position non alimentée, de sorte qu'une commande d'une pression de freinage (P_{B}) au niveau du raccord de pression de freinage de remorque (22) peut être coupée même pendant la liaison du raccord d'accumulateur à ressort (4) au puits de pression (3).

13. Module de commande électropneumatique selon l'une des revendications précédentes, dans lequel l'unité de commande de remorque (TCV) présente une soupape relais (20) qui présente
une entrée (23) reliée à l'entrée de réserve (11),
une sortie (24) reliée au raccord de pression de freinage de remorque (22),
une sortie de désaérage (26) par l'intermédiaire de laquelle la sortie (24) peut être reliée à un puits de pression (3), et
une entrée de commande (25) qui débouche dans une chambre de commande (100) commune,
dans lequel l'entrée de commande (25) peut être reliée à l'entrée de réserve (11) et/ou à un puits de pression (3) par l'intermédiaire de l'unité de soupapes de commande de remorque (65) afin de commander une pression de freinage (P_{B}) au niveau du raccord de pression de freinage de remorque (22).

14. Module de commande électropneumatique selon la revendication 13, dans lequel la chambre de commande (100) de la soupape relais (20) est limitée par un seul piston de commande (102).

15. Module de commande électropneumatique selon la revendication 13 ou 14, dans lequel la chambre de commande (100) peut être reliée à l'entrée de réserve (11) par l'intermédiaire d'une soupape d'admission (IV) pouvant être commutée électroniquement.

16. Module de commande électropneumatique selon les revendications 4 et 13, dans lequel la chambre de commande (100) peut être reliée à la première conduite de pression de redondance (16).

17. Module de commande électropneumatique selon l'une des revendications précédentes, dans lequel l'unité de commande électronique (ECU) est conçue pour
- amener l'unité de soupapes de frein de stationnement (8) à commuter, sur la base d'un premier signal de freinage de secours (S_{H1}) électronique, au moins une soupape (10) de l'unité de soupapes de frein de stationnement (8), de sorte qu'une pression de travail (P₂) permettant de désaérer l'accumulateur à ressort (6) de manière temporaire et étagée est commandée au niveau du raccord d'accumulateur à ressort (4) ; et
- amener l'unité de soupapes de commande de remorque (65) à commuter, sur la base du premier signal de freinage de secours (S_{H1}) électronique ou d'un second signal de freinage de secours (S_{H2}), au moins une soupape (IV) de l'unité de soupapes de commande de remorque (65), de sorte qu'une pression de freinage (P_{B}) est commandée au niveau du raccord de pression de freinage de remorque (22).

18. Module de commande électropneumatique selon l'une des revendications précédentes, dans lequel l'unité de commande électronique (ECU), l'unité de commande de remorque (TCV) et l'unité de frein de stationnement (EPH) sont intégrées dans un module.

19. Module de commande électropneumatique selon l'une des revendications précédentes, comportant un boîtier commun (2) dans lequel sont disposés au moins les composants de l'unité de commande électronique (ECU), de l'unité de commande de remorque (TCV) et de l'unité de frein de stationnement (EPH).

20. Module de commande électropneumatique selon l'une des revendications précédentes, dans lequel aucune soupape relais inverse n'est prévue.

21. Module de commande électropneumatique selon l'une des revendications précédentes, comportant un capteur de pression (90) redondant disposé au niveau de la première conduite de pression de redondance (16) ou du raccord de pression de redondance (42) et configuré pour détecter la pression de redondance (P_{R}) pneumatique au niveau du raccord de pression de redondance (42) et pour fournir un signal de pression de redondance (S_{PR}) correspondant sous la forme d'un signal de freinage de service (S_{R}) électronique redondant à l'unité de commande (ECU), dans lequel l'unité de commande (ECU) est conçue pour commuter au moins une soupape (RV) de l'unité de soupapes de commande de remorque (65) en fonction du signal de freinage de service (S_{R}) électronique redondant reçu, de sorte qu'une pression de freinage (P_{B}) correspondante est commandée au niveau du raccord de pression de freinage de remorque (22).

22. Module de commande électropneumatique selon la revendication 8, présentant une unité de configuration (700) au moyen de laquelle le module de commande électropneumatique (1) peut être configuré entre une configuration européenne de remorque (EAK) et une configuration scandinave de remorque (SAK).

23. Module de commande électropneumatique selon la revendication 22, dans lequel l'unité de configuration (700) présente une plaque de répartition de la pression (702), une soupape de curseur de commutation (704) ou une vis de réglage (703).

24. Module de commande électropneumatique selon la revendication 22 ou 23, dans lequel l'unité de configuration (700) présente un premier raccord de configuration (700.1) relié à l'entrée de réserve (11), un deuxième raccord de configuration (700.2) relié au raccord de pression de redondance (42) et un troisième raccord de configuration (700.3) relié au deuxième raccord (14b) de la soupape à 3/2 voies (14) à commande pneumatique.

25. Module de commande électropneumatique selon la revendication 24, dans lequel, dans la :
- configuration européenne de remorque (EAK), le premier raccord de configuration (700.1) est relié au troisième raccord de configuration (700.3) ; et dans la
- configuration scandinave de remorque (SAK), le deuxième raccord de configuration (700.2) est relié au troisième raccord de configuration (700.3).

26. Véhicule tracteur (502) comportant un module de commande électropneumatique (1) selon l'une des revendications 1 à 25 précédentes.
